(19) Europäisches Patentamt / European Patent Office / Office européen des brevets

(11) **EP 2 691 763 B1**

(12) **EUROPEAN PATENT SPECIFICATION**

(45) Date of publication and mention
of the grant of the patent:
**18.02.2015 Bulletin 2015/08**

(51) Int Cl.:
**G01N 29/14** *(2006.01)*          **G01N 29/38** *(2006.01)*
**G01N 29/44** *(2006.01)*

(21) Application number: **12720980.7**

(22) Date of filing: **20.03.2012**

(86) International application number:
**PCT/IT2012/000077**

(87) International publication number:
**WO 2012/131738 (04.10.2012 Gazette 2012/40)**

(54) **METHOD FOR THE DYNAMIC QUANTITATIVE CHARACTERIZATION OF THE AGEING OF SOLID MATERIALS**

VERFAHREN ZUR DYNAMISCHEN QUANTITATIVEN CHARAKTERISIERUNG DER ALTERUNG VON FESTSTOFFEN

PROCÉDÉ DE CARACTÉRISATION QUANTITATIVE DYNAMIQUE DE VIEILLISSEMENT DE MATÉRIAUX SOLIDES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.03.2011 IT RM20110151**

(43) Date of publication of application:
**05.02.2014 Bulletin 2014/06**

(73) Proprietor: **Gregori, Giovanni
00128 Roma (IT)**

(72) Inventor: **Gregori, Giovanni
00128 Roma (IT)**

(74) Representative: **Perronace, Andrea et al
Barzano & Zanardo Roma S.p.A.
Via Piemonte 26
00187 Roma (IT)**

(56) References cited:
• **GREGORI G. P. ET AL: "Ultrasonic monitoring of applied forcing, material aeging, and catastrophic yield of crustal structures", NATURAL HAZARDS AND EARTH SYSTEM SCIENCE, vol. 7, no. 6, 28 November 2007 (2007-11-28), pages 723-731, XP002661225, cited in the application**
• **GREGORI G. P. ET AL: ""Storms of crustal stress" and AE earthquake precursors", NATURAL HAZARDS AND EARTH SYSTEM SCIENCE, vol. 10, no. 2, 17 February 2010 (2010-02-17), pages 319-337, XP002661226, cited in the application**

## Description

The present invention deals with a method for the dynamic quantitative characterization of the ageing of solid materials.

Specifically, the present invention is concerned with a method that, upon relying on signals of acoustic emission released by the monitored material, affords to determine some parameters, which characterize dynamically its ageing stage. The method points out and focuses on definitely submicroscopic properties of a solid material, which can be experimentally monitored by no other known method.

Material ageing is a phenomenon that typically implies a time-evolution. However, it can lead to the collapse of a solid structure only in extreme case histories (i.e. it leads to its "catastrophe", according to the mathematical meaning of this term).

For instance, every given structure (such as a viaduct, a machinery, a building, etc.) is certainly reliable when it was artfully designed. But, its performance is no more reliable when its materials suffered by ageing: for instance, the Coliseum has a statics which relies on gravity, hence it holds since two millennia, while this shall not occur for every famous suspended bridge.

By "acoustic emission" (briefly denoted as AE) it is here meant every mechanical vibration of frequency "$v$", including whole spectrum from ultrasounds through the typical vibrations of an earthquake, and even through the "SFO" (seismic free oscillations) of the Earth.

AE monitoring dates back to the dawn of the history of classical physics. The method, which is here proposed, is specifically concerned with procedures of data handling and analysis of AE records. By this, a few parameter are derived that are suited to quantify the ongoing physical process and its dynamic evolution. The ultimate focus is on the microcrystal framework at the atomic/molecular scale size.

The purpose of the present invention is to provide with a method for the dynamic characterization of the ageing of a solid material. By this, it should be possible to get rid and to overcome every drawback that biases every previous technique.

One additional specific target of the present invention is to provide with a suitable apparatus and means for the exploitation of the method, which is the leading content of the invention.

The subject of the present invention is a method for the dynamic quantitative characterization of the ageing of a material. At least one acoustic transducer is applied to the material. It is tuned on a given corresponding pre-chosen frequency "$v$", in order to monitor the release by the material of an AE signal during a given time lag. The AE signal measured by every transducer is composed of a discrete series of rms values, denoted by $f(t_j)$, of the intensity of an electric potential. Every $f(t_j)$ refers to a time instant $t_j$ (with $j = 0,1,2,...$). In general, these $t_j$ are reciprocally delayed by a time increment $\Delta_0 t$, which

is pre-chosen depending on the kind of material and of the temporal resolution of the record which is needed in order to exploit a given target.

The method is characterized by the implementation of the following stages of the analysis of the AE time series.

A. Determination - for every frequency "$v$" - of the outliers of the AE time series. Every outlier is indicative of a tail in the statistical distribution of the $f(t_j)$ values, and this tail is indicative of an elementary decay process of the material or "flaw domain". The outlier time series denotes the temporal evolution of the flaw domains, which are associated with the given frequency "$v$", and thus with the ongoing changes inside the material.

B. Implementation of the "hammer plot", on the basis of the aforementioned discrete data series of $f(t_j)$, after having rejected all outliers as per item A.

C. Evaluation of a function, called "hammer index" $H(t_h)$. The "hammer index" $H(t_h)$ can be either $+1$ or $-1$, corresponding to every given time instant $t_h=1,2,3,...$, on the basis of the "hammer plot", as per item B. The value $H(t_h)= +1$ is representative of a counter-clockwise average curvature described by the hammer plot, and therefore it reflects a reaction of the material with respect to an external applied force. The value $H(t_h)=-1$ is representative of a clockwise average curvature described by the hammer plot, and therefore it reflects a recovery stage of the material subsequent to the externally applied perturbation. The "hammer index" $H(t_h)$ is representative of the statistics of the timing of the evolution of the "flaw domains". Also the other two diagnostic parameters are derived from the "hammer plot".

D. For every given 3-value sequence $f(t_k-1)$, $f(t_k)$ and $f(t_k+1)$, the osculating radius $R_H = \overline{P_i O}$, and optionally the orientation $\phi(t)$ of the tangent to the osculating circumference is computed at the point $f(t_k)$ of the trajectory in the hammer plot. This radius is directly correlated with the average width of the distribution, of lognormal type, which is characteristic of a "flaw domain" associated with the given "$v$" frequency which is considered. The "osculating radius" $R_H$, is a more precise quantitative measurement of the same information that is qualitatively provided by the "hammer index" $H(t_h)$.

The orientation $\phi(t)$ of the tangent to the osculating circumference is optionally computed because it is useful to depict in greater detail the dynamic evolution of the process, from the (statistical) trigger of a "flaw domain" through its final setting when the material has reached its new equilibrium state. It is the angle of the tangent to the osculating circle at point $f(t_k)$ reckoned with respect to the x-axis in the "hammer plot".

Preferably according to the invention, after stage A, the periodical components are to be singled out - by means of the algorithm *ARPA* - which are contained in the $f(t_j)$ time series. These periodical components directly refer, almost in real time, to the time sequence of the progressive downgrading of the material, which is closely related to the micro-composition and structure of that specific kind of material.

Preferably according to the invention, after the application of the stage A to the $f(t_j)$ time series, the same $f(t_j)$ series is transformed into a point-like process, suited to carry out the computation of the fractal dimension $D_t$ (in the time domain). This is an index of the ageing experienced by the material.

Preferably according to the invention, the AE signals may also be triggered by electromagnetic induction with the purpose to produce a magnetic hysteresis cycle.

Preferably according to the invention, after stage A, consider the case that $\Delta_0 t << \Delta_{fen}$, where $\Delta_{fen}$ is some time constant which is typical of the evolution of the performance of the given material. In this case, the Imbo algorithm is applied. It is aimed to evaluate the "saturation" of the material, and the trigger of its catastrophic yield. Differently stated, by this procedure a test is made about whether different forcing drivers, or simultaneous causes, eventually sum up altogether until causing a structural catastrophe of the material.

Preferably according to the invention, a further step E is executed, wherein the orientation $\phi(t)$ of the tangent to said circumference of step D is computed at the point $f(t_k)$.

One additional specific subject-matter of the present patent is the computer program, which is characterized by specific coded tools, configured to exploit, when operated on a computer, the whole method which is the subject of the present invention.

One additional specific subject-matter of the present patent is the storage facility, readable by computer, with a program stored in its memory, and characterized like the computer program that implements the application of the invention.

One additional specific subject-matter of the present patent is an apparatus for the dynamic quantitative characterization of the ageing of a material relying on the AE signals, and characterized by its components as follows:

> ◦ A system for data acquisition and data handling of the AE time series. This is composed of one or several acoustic transducers applied to the material. Every transducer is devoted to a corresponding pre-chosen frequency "$v$" of acoustic oscillation, and it provides with a signal of acoustic emission AE. The aforementioned system for data acquisition and their preprocessing exploits the data handling aimed to get the aforementioned data series of values $f(t_j)$ which are one object of the invention.
> ◦ One electronic unit for data analysis, configured to exploit stages A through D of the method, which is the subject-matter of the invention.

Preferably according to the invention, according to the present invention, the computer program, which is the subject of the invention, is installed on the aforementioned electronic unit.

The present invention is now going to be here described, in order to clarify its targets with no implicit limitation, and upon making specific reference to the figures which are here enclosed:

- figure 1 (after Paparo and Gregori, 2003) shows a qualitative scheme aimed to illustrate the AE time series of progressively decreasing frequency, where every frequency is characterized by a statistical distribution, which is here indicated as lognormal; its modulation ought to be pointed out, which appears on the tail of the distribution. EQ is an acronym for "earthquake".
- figure 2 shows a flow diagram of the method, according to the present invention, where the algorithms are indicated inside ellipses;
- figure 3 (adapted after Gregori et al. 2007), named "hammer diagram", shows a qualitative scheme suited to illustrate the procedure and algorithm for the hammer effect;
- figure 4 (after Gregori et al., 2007) shows a qualitative sketch aimed to illustrate how the eventual noise may by smoothed out;
- figure 5 shows a qualitative sketch aimed to illustrate the procedure for the computation of the index $R_H$ and the angle $\phi(t)$ of the tangent to the osculating circle; these two parameters characterize the speed of formation of a "flaw domain" corresponding to a given frequency "$v$" of the given AE time series.

## 1. Introduction

The present invention deals with a method suited to monitor the ageing - and its dynamical characterization - of structures composed of solid materials. It relies on passive records of acoustic emissions (AE), which are released every time that the crystal bonds of a solid object yield, due to the "fatigue" of the material by which it is composed.

The method is totally non-invasive, as it only relies on a signal that the system autonomously releases in any case, independent of whether the signal is monitored or not.

The method can be applied to every compact solid structure (such as concrete of every type, bricks, limestone, lava, stone or rock, marble *vel similia*, metal, wood, carbon fiber, fiberglass, glass, ceramics, ice, ....), while it cannot be applied in the case of non-compact material, such as loose soil. In this last case, the AE signals rapidly damps off and it is therefore impossible to perform a remote monitoring of phenomena and of their evolution.

On the other hand, since water (and in general also every other liquid) is a good ultrasound conductor, in the case that soil - or more generally every other non compact material - is soaked with water (or with any other equivalent liquid), it is possible to carry out AE monitoring analogously to the case of a solid body, although with a suitable warning while dealing with every specific case history.

For instance, in the case of ground monitoring in an area with landslide hazard - or of an embankment of a railway or of a highway - it is possible to monitor some solid structures, such as rocky outcrops (when they are available), or buildings made either of concrete or of metal or of any other solid material (such as for instance the palls of the electric power network, or some concrete palls specifically installed for this purpose, etc.). Indeed, these bodies, which are solid and compact, play the role of probes that are specifically dedicated to AE monitoring. In fact, if the ground, which supports them, changes the performance of their respective support, this event will trigger a change of their respective statics, hence a redistribution of the stress field inside the solid body. By this, the AE release results into a twofold monitoring:

 ∘ on the one hand it is indicative that the soil is yielding;
 ∘ in addition, when a suitable preliminary calibration has been carried out of the involved material, it will be possible to infer - in every given case history and with error bars to be suitably assessed in every given application - some information on the progress of ageing, and on the loss of performance, being a premonitory alert for a possible future catastrophe of the system.

For instance, this principle has been applied to volcano monitoring, in particular to Vesuvius. The monitoring device was located on a lava outcrop at a close distance from the central crater. The lava crop is the terminal of a huge "natural probe", which crosses through a significant (although unknown) fraction of the whole volcanic edifice.

In this way it has been possible to get an effective measurement of phenomena that every traditional seismometer cannot monitor. Indeed, a traditional seismometer can also record shocks of very feeble intensity, but only when they are triggered inside a much limited volume of ground around the seismometer. Their geophysical information is therefore essentially useless. Instead, by means of the AE records it has been possible to distinguish in this way a state of "inflation" and a state of "deflation" of the volcano (see section 4.1).

The method applied by the present invention deals with several different facets. It is original, and only much partially it already appeared in the literature, as it has been the partial concern of several scientific papers. In any case, these papers dealt only with a lesser part of the entire methodology. These papers played an important role in the development and optimization of the entire theoretical approach, which is aimed to focus on the information which can be objectively measured.

The method of the present invention provides with a monitoring in real time of phenomena that occur on the atomic or molecular scale, which are generally sub-microscopic. No other preceding known traditional technique can be compared with the performance of the method of the present invention.

In addition, the applications, which have already been exploited, deal with a much limited fan, and in the final analysis they were chosen only with the purpose to get a correct assessment of the logics of physical interpretation. In contrast, the fan, which is here envisaged, of potential applications is largely and fully innovative, and it has never been published. The papers, which already appeared, represent much partial stages, and they reflect the progressive evolution of the criteria, of the skill of the interpretation of measurements, and of the final physical understanding of phenomena.

In this respect - as it will appear proven and evident from what follows - also several specific applications of a few algorithms, which already appeared in some paper and which are here mentioned, in reality are much different compared to their logical meaning and implication inside the present general framework. The formulation in the framework of the present invention is logically and physically much better organized, and much more general and focused inside a concrete perspective of innovation of the present entire patent.

The ageing of a material is typically a phenomenon of temporal evolution, and only in extreme case histories it can eventually lead to the collapse of the entire structure (or to is "catastrophe" according to the mathematical meaning of this term).

For instance, a structure, such as a viaduct, a machinery, a building, etc., will be much reliable when its has been artfully designed. But, when its compositional material suffers by ageing, its performance will no more be reliable. For instance, the Coliseum relies on gravity and it holds since two millennia, while this will not occur for every large and famous suspended bridge.

It is essential to stress that the concern of the method is to issue a diagnosis, rather than to focus on "ageing". Neither the focus is on the phenomenon "catastrophe", as this is at most only an eventual or sometimes even an obvious consequence or corollary.

In this respect, it will be also possible sometimes to issue an eventual alert for a possible future catastrophe of the system, but only when dealing with specific systems. In addition, this possibility holds only inside suitable boundaries both in space and time, which are to be suitably assessed in every application. In addition, these boundaries, in general, do not match the needs for social applications. Much in the same way, a medical doctor issues a diagnosis about her/his patient, while she/he refrains from issuing any forecast about the passing away of the patient.

The concepts of "diagnosis" and of "forecast" too often are being improperly misunderstood. A "diagnosis" is just a matter of fact, based on purely scientific quantitative evidences. The concept of "forecast" - and its use - is rather intrinsically conditioned by practical considerations, related either to the kind and seriousness of the hazard or risk, and/or to the needs for the management of the emergency that may be associated with the event.

Differently stated, the definition of "forecast" - and mostly of the tolerance of its error bars - is an exclusive concern only by the user, depending on the specific kind of information needed for his purposes. That is, a "forecast" is no more a matter of scientific "diagnosis" of the system.

The term "acoustic emission". (AE) here used can be applied to every mechanical vibration of every frequency "$v$". It includes the whole frequency range from ultrasounds through the typical frequency of a seismic event, through the SFO (seismic free oscillations) of the Earth.

AE monitoring can be carried out by referring only to one frequency "$v$" alone. However, a more significant application ought to rely on at least two, or possibly on a few, different frequencies (see section 3).

The originality of the method, however, does not rely on the AE records *per se.* Their measurements began at the dawn of the history of classical physics. The originality of the method relies rather in the procedure for data handling, by which a few parameters are derived, which give a quantitative multiparametric index of the ongoing physical process including its dynamical evolution, on the basis of its atomic/molecular micro-crystal pattern.

Only a few much partial aspects of this methodology have been the object of a few previous papers. They were, however, applied only to isolated case histories, with no reciprocal logical coordination. In contrast, other substantial aspects, such as the logical links and general overall operative scheme - as it is emphasized in the following - are totally unpublished.

It has to be stressed - as already mentioned, and as it appears evident from the following - that the method of the present invention permits to focus on properties of a solid material that are largely sub-microscopic and that can be detected and measured by no other presently available technique.

As a consequence - on the basis of the tests that it has been possible to carry out - it has been shown that it is possible to monitor changes in the structural characteristics of the solid medium, and of its evolution, with a much greater time advance compared to what is possible by means of the diagnostic tools which are presently available in engineering.

This implies that the experimental know-how is going to be progressively incremented. It will grow up by means of the evidence accumulated by an ever increasing number of different specific applications to different materials (in buildings, metals, alloys, various woods, marbles, bricks, fiberglass, carbon fiber, etc.). It is therefore likely to expect that it will be possible to evidence some features, which at present are completely unknown, as no previous method exists, which is comparable with the method of the present invention, and with its effectiveness.

All this is therefore very likely to have implications that at present might hardly be foreseen, concerning the wide fan of potential practical applications of the method of the present invention.

A first diagnostic parameter used by the method of the invention is the fractal dimension $D_t$ of the AE time series. This parameter has already been object of several published papers, concerned with applications either to tectonic or volcanic systems, or to steels, or to (non-reinforced) concrete.

An additional set of parameters is focused on the characterization of the series of events, concerned with elementary space domains of the solid structure ("flaw domains"), every one of which implies AE release with an asymmetric statistical distribution (distribution that partakes to the so-called Kapteyn class of distributions).

In this way, it is possible to check, by means of an objective and quantitative measure, the coalescence speed of "flaw domains", from those of smaller size through others of progressively increasing size ("hammer effect", H). Also this parameter H ("hammer index"), the logic of which has been developed at a second time compared to $D_t$ , has been the object of a few papers, which dealt, however, only with tectonic applications.

In addition, owing to an additional quantitative parameterization - and concerning every given observed statistical distribution of this kind - it is possible to characterize its width, and the extension of its asymmetric tail (by means of the parameter "osculating radius" $R_H$). This is equivalent to measure quantitatively the mean speed of formation of a single "flaw domain" of the material which composes the structure. This diagnostic technique is fully unpublished and as yet never applied.

Similarly, it is completely unpublished the possibility to monitor the trigger threshold for the formation of a "flaw domain", by means of the instant evaluation of the H index. This requires, however and whenever possible, to collect AE records with a temporal detail much greater compared to what has been until now carried out.

Another possibility to monitor (statistically) the trigger of "flaw domain" events, and their subsequent evolution until reaching a new equilibrium state relies on a joint analysis of the osculating radius $R_H(t)$ and of the orientation $\phi(t)$ of te tangent to the osculating circle.

The time sequence is monitored of the events, which are associated to the yield of every "flaw domain", everyone associated with either one of the measured frequencies "$v$". Also their respective evolutionary characteristics are monitored. This is repeated for every frequency "$v$", and every respective inference compared with one another.

Summarizing, the ensemble of all these parameters provides with an unpublished diagnosis, which relies - in a totally non-invasive way - on monitoring in real time the micro-crystal processes, atomic or molecular, which in no other way could be detected and measured, and which make reference to definitely sub-microscopic scale sizes.

## 2. Observations

When a given frequency "$v$" has been selected, a (piezoelectric) acoustic transducer - devoted to that specific "$v$" - is put in close contact with one solid component of the structure that has to be monitored.

The number of different points where a sensor ought to be located depends on the size of the structure and on the more or less effective propagation of the AE signal through its body.

In general, in every case history of reasonably limited size (for instance a house of non-excessive size) only one measuring point is sufficient to monitor the entire building. The transducer will be located e.g. over a girder of the system or over some other component, which is believed to be structurally more important, because it can be reasonably considered to be subject to comparatively larger stress, or such that in any case its role is crucial for the performance of the whole structure, etc.

Much different is the case history, e.g., of a viaduct, or of a large crane, or of an oil-platform, or of a pipeline, or of along face of a hill with landslide hazard, etc. In every such a case history, it is necessary to implement an adequate simultaneous monitoring, carried out at different critical points, which are believed to be comparably more significant, depending on the spatial detail required by the user, who may have reasons to be concerned about the seriousness of different specific hazards etc.

The signal, which is measured by every sensor, is composed by a discrete series of measurements (every datum is an electric potential), and every recorded value refers to a time instant $t$. Different time instants are defined at relative time increments $\Delta_0 t$ (this increment may also change during the exploitation of the whole monitoring, or it may even be changed in progress, depending on the temporal detail which is requested during different stages of the evolution of the system).

A pre-amplifier - and subsequently an amplifier - are required before the input of the signal can be forwarded to the data acquisition system.

Every measurement is carried out by means of a device characterized by a minimum and a maximum threshold of the detected signal. The definition of these thresholds is critical, mostly when the AE are recorded in the field - due to the fact that the "natural probe" (see below) may be subject to abrupt and unpredictable discontinuities. This warning may, however, hold also for every manmade structure or also in laboratory tests (see below).

Therefore, in general it ought to be recommended - and it is worthwhile to plan - a device for a possible remote-operated change of threshold, in order to be able to optimize the record performance, while the monitoring of the system is in progress, and mostly when the sensor is remote control operated.

Compared to the time scale of phenomena investigated by the method of the present invention, the time lag $\Delta_0 t$ has to be much shorter.

The data acquisition system shall compute first of all the rms of all available "instant" AE records, which have been carried out during a pre-chosen time interval $\Delta_1 t \gg \Delta_0 t$.

Also this time interval $\Delta_1 t$ will be very brief, compared to the temporal detail investigated by the method of the present invention.

Summarizing, the data acquisition system will give, at every time instant in time series and at increments $\Delta_2 t$ (being $\Delta_2 t \gg \Delta_1 t$), one mean rms of all records (every one corresponding to one given time interval $\Delta_1 t$) that occur during a total given time interval.

This mean rms value is stored in a file, altogether with its associated instant of time, being ready for subsequent analysis.

The values for $\Delta_0 t$, $\Delta_1 t$, and $\Delta_2 t$ are parameters that may be changed in different case histories, and they depend both on the kind of instrumentation which is used, and on the diagnostic application which is considered. They will be chosen, therefore, depending on the specific needs and on a monitoring strategy that has to match the user needs.

## 3. The frequencies

The frequency "$v$" of the AE mechanical oscillation which is to be measured depends on the structural, physical, chemical, mineralogical, etc., characteristics (composition, geometry, rheology) of the system to be monitored.

The yield of crystal bonds implies first the formation of micro-flaws in the material - hence the formation of "flaw domains" - of a size such that, at the beginning, the relevant frequencies "$v$" will be an ultrasound of comparably high frequency.

On the other hand, whenever particular applications are to be considered which involve structures of large size, which may also be poorly known - such as in the case histories of large buildings or viaducts, or of ships or airplanes, or of boosters, or of pipelines, or of a large face of a hill with landslide hazard, or of seismogenetic structures, or of volcanoes, or of SFO of the Earth, etc. - it is certainly much interesting to monitor the whole system also by means of much lower frequencies (acoustic, infra-acoustic, or also of much longer period), in addition to the behavior of a few specific solid components of the system.

It should however be stressed that in these case histories the AE monitoring of the physical system is always carried out by means of much higher frequencies "$v$", in order to reflect the transit of a stress field through the system component which is monitored. Indeed, only high frequencies reflect the yield of crystal bonds, while the lower frequencies are associated with the final structural collapse of the system, in general when it is already unrecoverable.

Therefore, every frequency "$v$", which is much lower compared to the frequencies that are typically associated with the yield of crystal bonds, must be considered always only at a subsequent stage, and always starting from the analysis of the time changes of the signal at much higher frequencies "$v$".

The simultaneous reference to AE records at two, or better at a few, different, although reasonably close, frequencies "$v$", which are always in the ultrasound band, can result into a great practical advantage. The reason is that it is physically well known - and certain - that flaws of comparatively smaller size must originate AE of comparatively higher frequency "$v$". Therefore, one and the same degenerative phenomenon of ageing of a solid material - which therefore implies an identical or analogous kind of precursory signal - is to be expected to be monitored at successive time instants and always referring to progressively lower "$v$".

It should be emphasized that this property of AE monitoring has a great heuristic relevance - and it could hardly be overestimated - as it provides with a univocal and certain discrimination between, on the one hand, precursor phenomena of a given event, and, on the other hand, after-event phenomena.

For instance, the practical and objective impossibility is well known to distinguish foreshocks and aftershocks. This represents one of the insurmountable logical barriers of seismology (this is a well known insoluble dilemma). The use of AE is the unique exception, which can avoid this crucial logical and operative drawback.

Therefore, when using AE, some progressively lower frequencies "$v$" must be expected to give identical or analogous precursory signals, by which it is possible:

> 1) on the one hand to measure the speed of the degenerative process that biases the structure performance;
> 2) and on the other hand to give the possibility to confirm the reliability of an eventual alert, thus reducing or even excluding the possibility of a false alarm.

On several occasions, this will be equivalent to allow for a practical reduction of costs, hazards and risks, and/or damages and/or causalities, for working security, or for natural hazard management, etc.

This specificity certainly constitutes one of the most important aspects of the method according to the present invention, and one can state, maybe, that this represents a unique-value feature and advantage of this AE technique, compared to other techniques, which have more or less similar monitoring and/or diagnosing targets.

## 4. The physical principle

An "ideal" elastic object is a mere logical abstraction, with no real objective correspondence in reality. Any one object of this kind ought to be *per se* strictly eternal and indestructible, a feature that does not exist, neither it can exist.

An object is said to be "solid" due to the presence of intra-molecular and intra-atomic bond that characterize its crystal structure.

Every solid object in natural reality, when it is subject to some stress of any kind, shall thus experience the yield of some - more or less relevant - fraction of crystal bonds, and this is the physical reason for the (always strictly unavoidable) occurrence of phenomena which cause the "fatigue" of materials and their "ageing".

When a force has been applied, a few bonds shall yield, thus forming a micro-flaw. This will be associated with a release of AE of frequency "$v$", associated with the typical size of that given flaw domain.

The application of a successive force or stress, will cause a yielding of additional crystal bonds. They will preferentially occur where the structure is comparably weaker, i.e. close to pre-existent flaws.

That is, the phenomenon keeps memory of its previous history.

The degenerative process of the solid structure occurs while the existing micro-flaws and flaws give rise, by coalescence and implosion, to flaws of ever increasingly larger size.

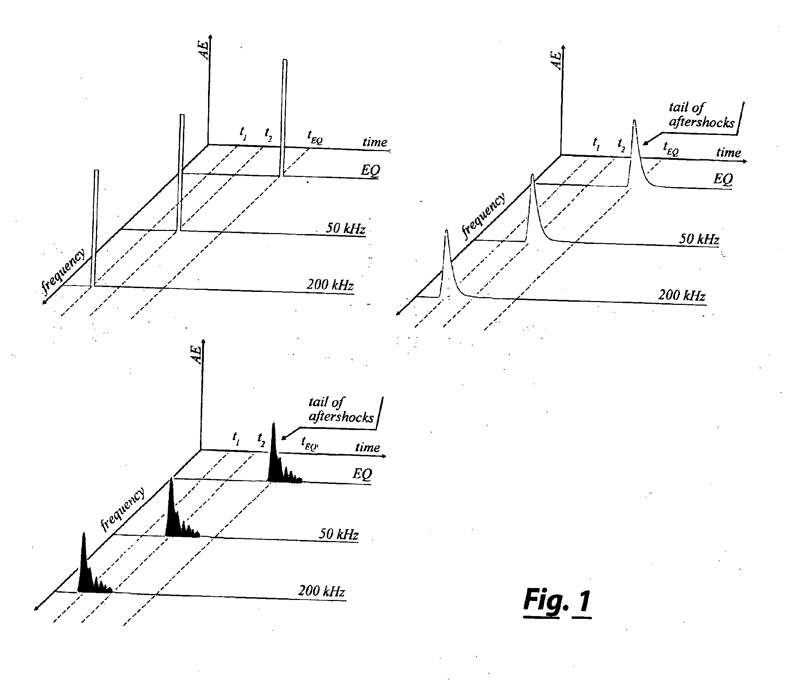

That is, during the evolution of the process, AE are released which are characterized by progressively lower frequency "$v$" (figure 1).

Figure 1 is an indicative sketch. The yield of comparatively smaller micro-flaws causes an impulse of AE at a comparatively higher frequency "$v$", while microflaws or flaws of increasing size originate AE of progressively lower frequency "$v$" (figure 1a).

The shape of these impulses (for every given "$v$"), however, is not perfectly rectangular (neither it will appear like a simple "$\delta$-Dirac" function). Rather it will look, approximately, like a lognormal distribution, due to the physical rationale which is explained at section 4.2 (figure 1b).

The "tail" of every distribution of such a lognormal type may also be characterized by periodical modulations (figure 1c) that, in the case of seismic frequencies, are associated with the aftershock sequence (or, in the case of ultrasounds measured on volcanoes, they are associated with solid Earth's tides). Refer to Paparo and Gregori (2003).

Two kinds of physical arguments have to be considered.

## 4.1 Either 3D o 2D space distribution

The structural characteristics of the medium - according to the crystallographic meaning of the term - enters into play, because flaws of progressively increasing size progressively get better organized. At the beginning, the AE are released by sources that display an approximately uniform space distribution. Hence - as a first order approximation - they can be considered to be "three-dimensionally" (3D) distributed. The subsequent evolution will later tend to become better organized, until reaching a bi-dimensional distribution (2D), thus displaying the well know pattern which is typical of the cleavage plane of every crystal structure.

It is possible to compute, by means of a particular algorithm, a parameter - which is briefly denoted in the following as "fractal dimension" $D_t$ (and for a matter of definition it will always result $0 \leq D_t \leq 1$) - such that in the case of a 3D distribution it is $D_t = 1$, and in the case of a 2D distribution it is $D_t = 0$. However, in general, these values $1$ and $0$ are to be referred to ideal asymptotic conditions, which are different from what is actually measured in reality.

This procedure has a twofold implication.

A first case history is found when we have to monitor the ageing of a solid structure (of a building, of a manmade structure, of a machinery, etc.). When the material is "young" and it displays a good performance, it will be found that $D_t$ is close to $1$. Its increased ageing will rather be characterized by an evolution of $D_t$ towards progressively lower values. For instance, an experiment carried out with steel bars has shown that - concerning that specific kind of steel - the breaking of the bar occurs when it is reached the value $D_t \approx 0{,}45$ (Biancolini et al., 2006). This threshold shall always be determined empirically by laboratory tests, as in general it is different for materials that have a different composition.

As a second remark - in the case that one wants to monitor the cause of the stress rather than the performance of the material - we know that the value $D_t = 1$ 1 corresponds to a distribution of the cause which is 3D distributed inside the medium that releases the AE. In contrast, wherever the structure is during a recovery stage after having suffered by a stress - that is when the solid structure has already been "abandoned" to itself and therefore it is searching for a new equilibrium after having suffered by an external perturbation - it will be observed that its $D_t$ evolves, more or less rapidly, towards progressively lower values during its progressive resetting. This behavior will depend by the formation of microflaws, which are increasingly better organized towards a 2D pattern and will be therefore characterized by a decreasing $D_t$ until they reach a new stage of reasonably stable equilibrium.

That is the concern is not about the performance of the material, rather about the variation of the primary applied stress to the structure. This temporal evolution can be effectively monitored in detail also by means of the "hammer effect" parameters, i.e. $H(t)$, $R_H(t)$, and $\phi(t)$.

A typical example of this kind is represented by a volcanic edifice. When the pressure of the endogenous hot fluids is increasing (i.e. when a volcano is "inflating") a value of $D_t$ close to 1 will be observed, due to the 3D diffusion of hot fluids through the porosity of the volcanic edifice.

In contrast, when the endogenous pressure of the hot fluids is decreasing, the volcanic edifice - which is no more supported by the endogenous pressure - will progressively reset under the action of its weight (i.e. the volcano will "deflate"). In this case, its old structures will yield, and the phenomenon is going to be increasingly better characterized by cleavage micro-planes of its crystal structures. Differently stated, $D_t$ will be $< 1$ until becoming perhaps close to $0$.

It should be pointed out that this phenomenon deals with micro-deformations. Their width, however, is such that they are certainly not measurable by any other device. This phenomenon has been tested very well by records collected on Vesuvius (Paparo et al., 2004, 2004a), on Stromboli (Paparo et al., 2004a; Gregori e Paparo, 2006) and on the volcano Peteora on the Andes Argentinean/Chilean border (Ruzzante et al., 2008). All these investigations, however, did not make use of the aforementioned "hammer effect" parameters, i.e. $H(t)$, $R_H(t)$, and $\phi(t)$, because at that time they had not yet been discovered.

In the Vesuvius case history, the correlation has also been investigated with the traditional seismic records: when the volcano is "inflating", several very feeble shocks are detected by seismometers (and not by the inhabitants). In contrast, only few shocks occur while the volcano is "deflating"., but they are detectable both by seismometers and often also by the local inhabitants.

The definition, the use, and the check of the heuristic potential of this parameter $D_t$ have already been the object of several papers, which are here listed in the reference list,. They were formerly concerned only with geophysical (tectonic and volcanic) applications, and subsequently they dealt either with small bars of (nonbetter specified) steel, or with suspension bars, made of martensitic steel, of the super-attenuators of the VIRGO experiment, or with (non- reinforced) concrete.

## 4.2 Time distribution

Consider a given frequency "$v$" which is intrinsically associated with a flaw of a given size (this characteristic size certainly exists, although in general it might be impossible to estimate its exact geometrical width).

It is realistically reasonable to argue that in general the probability that a new crystal bond yield is proportional to the number of bonds that already previously yielded. That is, the speed of the ageing process changes with time.

This mathematical property is just the same which is applied to every public service (the probability that a user gets advantage of the service is proportional to the number of users who already use it; this is the principle of rush hours, etc.).

The same principle is used also in the statistics of a topographic relief (the so-called hypsometric curve either of a geographic region or of a planet), or when dealing with the classical case history of a sand pile (the probability that a sand grain is located at a given height requests that a corresponding and adequate number of grains sustain if at that given height).

In every such a case history, the theory which is applied - since the beginning of the 1900's - is known as "theory of the Kapteyn class distributions". The distribution of this kind, which is best known, is named "log-normal".

The AE applications, which are listed here below and that already have been tested, make reference to the simple case of a lognormal distribution. However, upon considering specific physical exigencies focused on much peculiar applications - in order to account for particular physical effects which are intrinsic to the specific system which is investigated - it may be sometime necessary to appeal to other distributions, always of the Kapteyn class, that, in any case, will not be much different compared to the simple lognormal distribution. Owing to this reason, all what is here stated, and which concerns the lognormal distribution, has to be properly conceived as being applied also to the more general case history of any other distribution of the Kapteyn class.

In any case, every distribution of this kind is certainly much asymmetric. Figures 1b and 1c show qualitative sketches, where the distributions are roughly drawn like lognormal, although no concern is considered about their width, which may be more or less wide, and which will be different for different materials - and for the same material it will be different also depending on the frequency "$v$" (see below).

Every flaw is therefore characterized by a suitable geometric size, to which an AE release is associated of a given "$v$". However, as the system evolves, the flaws of that given-size will collapse, and owing to coalescence they will form flaws of increasing size that will release AE of progressively lower frequency "$v$".

Hence, while the impulse of a higher "$v$" fades off, the impulse of a lower "$v$" increases.

This concept is well evidenced in the cartoon of figure 1.

Differently stated, a flaw of a given size will evolve, during the progressive ageing, into a flaw of comparatively larger size.

Let us call therefore "flaw domain", for every given "$v$", the physical geometrical space-domain defined by an average volumetric extension, which is typical of the flaws that release AE of that given "$v$".

It should be pointed out that in general it is certainly impossible to observe one single "flaw domain" - much like it is impossible to observe one single molecule of a gas.

On the other hand, it is possible to measure, by means of the AE, the statistical characteristics of these "flaw domains" - much like, in the analogy with a gas, it is possible to measure the average kinetic energy of its molecules, even though it is impossible to measure the single molecule (i.e. one measures the temperature of the gas, rather than that one of every single molecule, or the size of every molecule).

This measure of the statistical properties, which are intrinsic of the material which composes the structure that is investigated, can be much effectively carried out by computing suitable typical parameters of the temporal distribution of the AE that are recorded at that given "$v$".

This monitoring will be carried out according to three different primary criteria.

As a first item, every aforementioned distribution (either of the Kapteyn class, or more simply lognormal) is characterized by an asymmetric tail.

The space distribution of the "tails", and their repetition in time, are an intrinsic characteristic of the kind of material which is used. For instance, if in a metal alloy the composition is varied also by a little amount, the economy of the internal crystal bonds will be correspondingly changed. Therefore, when an equal force will be applied, the temporal distribution of the "tails" will be correspondingly changed.

Therefore, we must monitor the history of the evolution and formation of new "flaw domains" of progressively increasing size.

However, it has to be emphasized that this kind of analysis cannot be *tout court* considered like a concern about a mere mathematical aspect. Indeed, one has to consider, among the different algorithms that may be envisaged, only those ones which have a peculiarity that is specifically akin to the physics of the problem. Therefore an algorithm, which results certainly very effective in a given application, may result of little use when it is applied in a different physical framework.

That is, the rationale is certainly correct *per se,* while its real correct formulation is to be considered as a function of the specificity of the physical framework which is analyzed.

As a second item, it will be possible to distinguish time intervals during which (statistically) the raising phase prevails of the distribution (either of the Kapteyn class, or more simply lognormal), compared to other time intervals during which the descending phase prevails, i.e. during the "tail" of the same distribution ("hammer effect") (Gregori et al., 2007), including its typical derived parameters $H(t)$, $R_H(t)$, and $\phi(t)$.

As a third item, the typical width of every distribution (either of the Kapteyn class, or more simply lognormal) changes as a function of the frequency "$v$", depending on the speed of the ongoing ageing process.

In the final analysis, these three criteria give a quantitative indication about the physical typical timescale of the evolution of a material during its ageing and consequent natural degrading.

This speed of evolution and of natural ageing certainly is a function of the timing of the applied stress - indeed it is well known that every object whenever it is subject to a comparably more frequent stress, or to a stronger stress, is always characterized by a more rapid loss of performance.

On the other hand - with equal applied stress (for instance to a railway viaduct when a train crosses it, and the train always has some typical size and speed) - the ageing speed, and the speed of general degrading, of the structure is certainly indicative of its progressive loss of performance.

Only the aforementioned hammer effect, proposed as a second criterion, has been (partially) the object of a systematic investigation, with specific application to real case histories, already included in published papers.

In contrast, as far as the first aforementioned criterion is concerned, until now it had no concrete application, and as far as the third criterion is concerned, the real great heuristic potential has not yet been adequately explored. In addition, the relevance of the information provided by the full set of the "hammer effect" parameters i.e. $H(t)$, $R_H(t)$, and $\phi(t)$ has not yet been fully assessed in its wide applicative perspective.

In any case - as far as it has been possible to asses from the specialized literature - it appears evident that no method or measuring instrument is available - except the literature here explicitly listed - suited to provide with any diagnostic information, which can be comparable with what is provided by the present invention.

## 5. Data analysis

### 5.1 Preparation of the data series

It is essential that the raw data series of the original records is composed of data observed in a strictly chronological increasing order, and that the time instant of every record is specified together with the intensity of the measured AE signal.

In contrast it is not necessary that the records are carried out at constant time increments $\Delta t_2$, as the analysis autonomously takes into account the actual instants of time, even when the chronological sequence is irregular, of the times at which the different observations were carried out. This is important for instance when dealing with measurements in the field, in order to take into account the time lags during which the recording station is tested for maintenance and/or for damage recovery.

It should be however recommended -mostly whenever AE records have to be compared that refer to different locations on the same structure - that the definition of the time instant is exactly the same in the different sensors and data acquisition systems (for instance it is recommended to refer to satellite determined time). This is important in order to monitor the ageing information that is almost simultaneous but refers to different components of the system. The possibility to know what precedes what, or viceversa, may result very important for the structural engineer.

The algorithm is defined in such a way that it singles out, autonomously and effectively, eventual spurious records, which may occur in every raw data series.

It is advisable - and in a few case histories it might result necessary - to display a plot (for instance on monitor) of every given data series of the AE records, before carrying out any kind of analysis. This is not strictly necessary. But it is advisable that this check is always carried out (either by operator, o by some automatic procedure) in order to get rid of eventual unexpected substantial physical changes in the structure of the system. In fact, a discontinuity in the trend of the measured AE signal may be a consequence of substantial physical changes of the structure which is monitored, and in some case histories it may be necessary (or advisable) to change the parameters that have to be used while applying the algorithms of the method of the present invention. A rapid visual check on the plot of the data series may be sufficient. An automatic procedure may be effectively applied by means of the algorithm "SALTO" explained in the appendix.

For clarity purposes, let us refer to a specific case history.

Whenever a tectonic structure is monitored - by means of sensors applied over a rocky outcrop, but the same applies for instance to the case of monitoring a hill sides with landslide hazard - some unexplained and unexpected discontinuities have often been observed, being alternatively positive or negative. Their occurrence frequency has been almost of a few events per year [cfr. Lagios et al. (2004), Paparo et al. (2006), Poscolieri et al. (2006, 2006a), Gregori et al. (2010)].

The most reasonable explanation is related to the fact that a rocky outcrop is the visible terminal of a much large body underground, of unknown size, named "natural probe".

The measured AE signal is originated at some unknown site along this natural probe, and the former released AE intensity is variously damped depending on the quality of AE propagation along the body of the natural probe.

Sometimes a resetting of soil may happen, which causes some new fractures of the natural probe. Otherwise, sometimes water or other subterranean liquids may fill by various amounts the fractures of the natural probe. In this case, in contrast with a fracture empty of water, the propagation of the AE signal abruptly becomes much more effective. This occurs when one and the same fracture is eventually filled up with water or with other liquids, which are excellent AE conductors.

In these case histories, the measured AE signal appears to display abrupt discontinuities. Neither it helps to "rearrange" arbitrarily the discontinuity (for instance by cancelling by a visual criterion every abrupt step in the plot of the data series by adding an arbitrary offset), as also the scatter of the records changes altogether with the discontinuity. Indeed, the zero reference level of the records does not change, while the amplification of the scatter is changed.

In the case of every occurrence of this kind, the unique effective solution resulted to carry out independently and separately the analysis on the data series recorded either before or after the discontinuity.

Indeed, the method of the present invention provides with parameters that are independent of the absolute intensity of the recorded AE signal, and it rather makes reference to the relative variations of the signal *vs.* time.

Therefore, the different amplification of the scatter is irrelevant as far as the ageing properties are concerned of the material which composes the natural probe. At the same time it makes a nonsense to analyze like a unique AE data series different lags of measurements, every one being characterized by a different amplification of its respective signal. We have therefore to take into account the possibility of abrupt and unpredictable changes in the damping of the AE signal which is propagated from its source through the measuring sensor.

This mostly applies to records in the field, but it holds also for manmade structures, depending on their unpredictable although certain loss of performance. Neither it has to be expected that this loss always occurs smoothly.

Indeed, upon using the "hammer effect" parameters $R_H(t)$, and $\phi(f)$ it is possible to realize that the same effect also occurs on the microphysical scale.

Owing to all these reasons, it might be sometimes worthwhile, or maybe sometimes even necessary when operating in the field, to change, while the AE monitoring is ongoing, the amplification of the recorded signal, which is suited for subsequent analysis.

The raw data series of AE records (which is supposed to contain no more any discontinuity of the aforementioned kind) will be here denoted by $f(t_j)$ (with $j = 0, 1, 2, \ldots$ being the progressive order number), where the time instants $t_j$ are defined according to the aforementioned requirements.

## 5.2 Basic operative rationale

Two types of application are envisaged.

The first type of application is concerned with a steady real-time monitoring of structure performance.

In general - apart eventual and comparatively simpler case histories - a first analysis will be carried out - almost in real time (apart at most very brief computing-time delays).

Successively, on the basis of the output from the aforementioned brief analysis, the need will be considered for a more detailed analysis, which in general will require a longer computer time.

Therefore, the records will be stored as long as they may still be eventually interesting for subsequent more refined analysis. When they are no more of interested, they may be deleted.

In contrast, the diagnostic parameters will be kept like a memory of phenomena, and their trend *vs.* time (in some case histories up to the secular time scale when dealing with older although partial data sets) might result to be of great help to monitor the progressive loss of performance of a structure.

Every kind of analysis has a cost, either for hardware, or for software, or for the eventual data storage.

On the other hand, it makes a nonsense to plan to carry out, up to its maximum detail, every kind of analysis which is possible to envisage as a matter of principle. The comparatively simpler initial analysis ought to help to guess, if an when, it is worthwhile to carry out the aforementioned refined second phase of the analysis.

This choice will be therefore determined by the specific needs of the user, in order to optimize the cost/performance ratio.

The second type of application deals with a periodic and/or occasional check of structure performance and security.

When dealing with some structures (for instance with a crane, or with every kind of mobile machinery, such as the bearing components of rolling stock such as the axles of rail cars, a ship, a submarine, a helicopter, an airplane, a booster, etc.) it will be more practical, economic and effective to carry out checks at regular prefixed time intervals, either periodically, or depending on the workload of the structure, etc. (for instance recall the analogous obligatory prescription of an annual check control for cars either for security or for anti-pollution purposes, etc.).

This target may be achieved by carrying out an AE measurement, at suitable given frequencies "$v$", by means of a portable instrumental setting including an immediate analysis facility, by which it is possible to carry out in a brief time a test of the performance quality of the solid material which composes that structure, or a few of its critical components.

In a few cases, it will be possible to get advantage of the stress which is normally applied to the structure during its operative conditions.

Otherwise, when this is impossible, there is need to rely on some device which causes a very gentle externally applied stress, capable to trigger an AE release suitable to diagnose the system. This will be possible with no concrete difficulty, and in either one of several ways that may be hypothesized in every given case history.

## 5.3 First operation - Search for outliers and estimate of the average trend of the AE records

According to the classical theory of distributions, one record is called "outlier" whenever it manifestly does not partake - on a statistical basis - to a given reference distribution which has been arbitrarily pre-chosen as test tool.

Let us choose an arbitrary time interval $\Delta_3 t$.

Call $t_0$ the initial instant of time of the data series, and let $\Delta_4 t$ be another arbitrarily pre-chosen time interval.

For every time instant $t_k = t_0 + k\Delta_4 t$ (with $k = 0$, 1, 2, ...) let us consider all records collected during the time interval $t_k - \Delta_3 t/2 < t < t_k + \Delta_3 t /2$.

Consider the statistical distribution of all these records, and by means of a suitable algorithm select its outliers.

Store all these outliers in chronological order into a file called OUTLIER-1.

Then, compute the mean value $\overline{f}(t_k)$ associated with the time instant $t_k$ and computed by means of the only records that are not outliers.

Let us specify how we can carry out practically the classification of every given AE record, by a suitable algorithm, and how we can distinguish between outliers and "normal" values.

As a first step there is need to define one given distribution for comparison or reference, and - as mentioned above - this relies on an arbitrary choice.

But, owing to the well known central limit theorem, which relies on the classical studies by Gauss, it is well known that every series of experimental measurements - which by definition contains no systematic deviations with respect to a "random" disturbance - must display a distribution which is called "normal" or "Gaussian" that *per se* is typically symmetric.

If we want to recognize a distribution - that, owing to the physical reasons explained in section 4.2, we know it is either lognormal or of the Kapteyn class, and it is therefore asymmetric, or it is characterized by a "tail" - it will be sufficient to seek its "tail" by comparing it with a symmetric distribution of Gaussian type.

In the literature the "Chauvenet criterion " is reported for this purpose. It is very effective for manual data handling, but it is heavy and unpractical for computer data analysis.

An algorithm, envisaged a few decades ago by the author (Gregori, 1984, 1990, 1993a, 1994, 1998; Gregori et al., 2002; Gregori and Paparo, 2004), and which was repeatedly used with full success, is here called GMPD ("geometric mean of the probability density"), and is here explained at the end of the present description, in the section named "appendices".

Another algorithm, studied by the author and named T5, is in some respect analogous to GMPD, but it is based on a rejection at the 95% confidence limit, and it resulted roughly equivalent, and with an effectiveness that resulted comparable with, or even with a non-better performance, compared to GMPD. In addition, the T5 algorithm, compared to GMPD, is much heavier in terms of computer time.

Therefore GMPD appear with no doubt to be comparably much more rapid and effective, in addition to be perfectly rigorous.

Therefore, let us compute the series of residuals defined as $g(t) \equiv f(t) - \overline{f}(t)$. Note that $f(t)$ now includes all values of the original data series, including its outliers.

This series $g(t)$ will be computed for instance with reference of the original aforementioned set of time instants denoted as $\{t_j\}$. In this case, since the $\overline{f}(t)$ are defined at the time instants $\{t_k\} \neq \{t_j\}$, is it necessary to apply a suitable interpolation.

Then, repeat over $g(t)$ the identical procedure for the selection of outliers which was applied over $f(t)$.

Call OUTLIER-2 the new file of outliers obtained by means of this procedure.

It will be thus realized that OUTLIER-1 and OUTLIER-2 are largely almost coincident (in practical case histories, the comparative differences resulted roughly of the order of magnitude of 5%).

Combine the two series OUTLIER-1 e OUTLIER-2 into a new series of outliers called OUTLIER-3, where every outlier of the sequence shall never be repeated, and all elements will be in a strict chronological increasing order.

In what follows, only the outlier series OUTLIER-3 will be considered. However, the identical analysis may be carried out (as an optional) also to OUTLIER-1 and OUTLIER-2.

The advisability to compute separately OUTLIER-1 and OUTLIER-2, even if they are almost coincident, is related to the fact that the two distinct data sets resulted heuristically useful when the measured signal unexpectedly ranged outside the measuring thresholds, while it was not possible to change the minimum and maximum thresholds during data recording.

Three different kinds of analysis are now to be carried out, in any order.

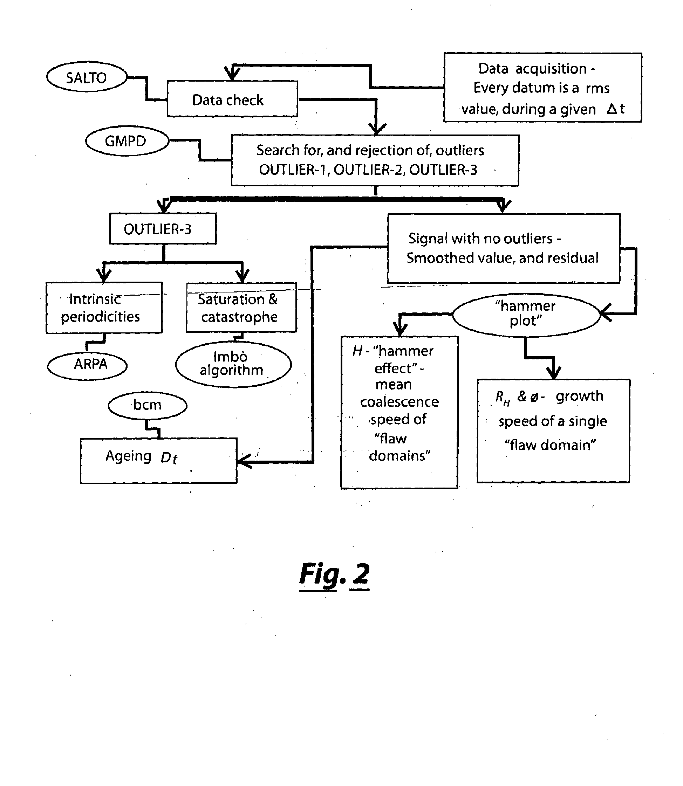

Differently stated, every analysis here considered in the following may be carried out independent or autonomously of the others (figure 2).

With reference to figure 2, it has to be pointed out that a few parts of these procedures have already been published, others are original, as well as it is original the general rationale of the logical framework and of the physical interpretation of the whole approach. As far as the algorithms are concerned, the following comments are to be specified. "SALTO" is elementary. GMPD is original by the author, although it has been implemented a few decades ago, and it has been extensively used in the literature. Concerning "bcm" it is well known, and mentioned by every book on fractal analysis. "*ARPA*" is an original improvement, implemented by the author, of a classical argument of the theory of point-like processes. Such an improvement is specifically focused on the needs for data handling of climatic or volcanic data series. Therefore, is has already been published, although only referring to that specific kind of geophysical data series. In contrast, *ARPA* has never been published for application to AE data series. The algorithm for the hammer effect has been only partly used and published, although applied only to geophysical data series. In contrast, as far as the formation speed of a "flaw domain" ($R_H$), and its trigger through $\phi(t)$, as well as the same concept of "flaw domain" - which is an essential logical key of the entire physical interpretation - they are a substantial logical content, which is totally new and never published.

### 5.4 The stage of material ageing - Computing the fractal dimension $D_t$

A threshold $\varepsilon > 0$ is arbitrarily chosen and aimed to define an "AE event".

As far as the practical criterion is concerned that has to be followed in the choice of $\varepsilon$ see below.

Consider the series of residuals $g(t)$ and claim that an "AE event" occurs every time that (as absolute value and sign) it is $g(t) > \varepsilon$. But the same analysis might be carried out also to the "AE events" defined by $g(t) < -\varepsilon$ [never checked, although it ought to ive the same results, owing to an inference from $R_H(t)$, and $\phi(t)$].

It should be pointed out that the entire subsequent analysis is fully independent of the more or less large value of $|g(t)|$. Indeed, the intensity of the measured AE signal depends on several unknown factors (i.e. the location of the AE source, its nature, state and acoustic conductivity of the components of the structure that are located between the AE source and the AE sensor that detects it after having experienced an unknown amount of damping, the essentially arbitrary choice both of the electronic amplification of the recorded signal and of its detection thresholds, etc.).

In this way, a time series of "AE events" is available. Call it $\{E_i\}$ ($i$ = 0, 1, 2, ...), where every $E_i$ is defined by its time instant $t_i$ (while, as already mentioned, the more or less large value of $|g(t_i)|$ is no more taken into account).

Let us choose arbitrarily a suitable time interval $\Delta_5 t$, and also another time interval $\Delta_6 t$.

Let us consider all elements $E_i$ that fall inside the time interval $t_m - \Delta_5 t /2 < t_i < t_m + \Delta_5 t /2$ for every $t_m = t_0 + m \Delta_6 t$ ($m$ = 0, 1, 2, ...). Call $\{e_i\}$ this subset of $\{E_i\}$.

For everyone of these $\{e_i\}$ compute the fractal dimension $D_t$ (by means of the "*bcm*" algorithm, which is explained in the appendix at the end of the present description) and get by this the diagnostic parameter $D_t(t_q)$ (with $q$ = 0, 1, 2, ...).

Laboratory experiments, carried out on specific materials of interest, shall asses, *a posteriori*, the $D_t$ thresholds that do correspond to particular stages of the evolution of the ageing of the material, until its loss of performance and until its eventual final structural collapse (which is here called "catastrophe" according to its mathematical meaning).

The $D_t$ parameter resulted to be very sensible, and it has been possible even to assess how many times a bar of martensitic steel has been bent after having been casted (Braccini et al., 2002).

The criterion remains to be specified, which has to be followed for the choice of $\varepsilon$. Consider some given subset, which contains the experimental records which fall inside an arbitrarily pre-chosen and suitable time lag. This time lag is not necessarily long, although it should be believed to be significant in order that this subset characterizes the type of the whole series $g(t)$ of the residuals, which are to be analyzed.

Compute the mean $\mu$ and the rms deviation $\sigma$ of the $|g(t)|$ included in this subset - and just by a matter of definition the value of $\mu$ will result close to zero.

Let us try and choose $\varepsilon \equiv \varepsilon_k = k\,\sigma/10$ (with $k$ = *1, 2, 3, ..., 10*).

For every $k$ which has thus been chosen, compute $D_t$ for the aforementioned subset, and call $D_t(k)$ this computed value of $D_t$.

Plot $D_t(k)$ *vs. k*.

When $k$ is small, $\varepsilon_k$ will result very small, just by definition and due to the following reasons. The ensemble $\{E_i\}$ of the "AE events" which is thus found will be comparably very large, because all, or almost all, the lesser random deviations are implicitly considered "AE events". They are implicitly considered "AE events" also in the case that they are physically originated only by eventual perturbation factors, which determine the random errors of a measurement. Differently stated, also the noise will be considered like an "AE event". Hence in this case $D_t(k)$ will be found to be very large; let us say *tout court* that $D_t(k)$ will be found to be close to *1*.

When $k$ increases, the number of false "AE events", which are caused by noise, will correspondingly decrease, and the result is that $D_t(k)$ will consequently progressively decrease - due to its same mathematical definition - compared to its previous value.

Whenever $k$ has increased at such a level that practically the entire noise has been cut off, $D_t(k)$ will appear to decrease almost stepwise, and it will thus indicate the physical value $D_t(k)$ which is relative to the objective ageing of the material which composes the structure.

Therefore, when the plot of $D_t(k)$ *vs. k* is inspected, a rigorously decreasing trend will be found (just be a matter of definition), which however will display a stepwise decrease at a suitable value of $k$. The minimum $k$ value - let us call it $k_{min}$ - at which the step of $D_t(k)$ occurs is the optimal value. Hence, the optimal choice will be $\varepsilon = k_{min}\,\sigma/10$.

As an indicative value, concerning the field measurements that have been already analyzed, this optimal value has been found $k_{min} = 4\sigma/10$. In general, this value for $\varepsilon$ is typical - and it is specific of every particular application - and it will always be the same for that specific kind of application. Therefore, it will be determined once forever, while dealing with that kind of application, and the same $\varepsilon$ will always be used in all subsequent analyses of that kind.

## 5.5 Ageing speed - Existence and time sequence of "flaw domains"

The algorithm for outlier rejection (either GMPD, or T5, or Chauvenet's, or other) is defined depending on the preliminary choice of a few defining parameters. This algorithm is equivalent to some kind of "logical sieve", and the size of its "logical holes" depends on the choice of its parameters.

This algorithm was originally conceived like a tool suited to single out spurious measurements, caused by accidental disturbances (which occur for instance in the power network for energy supply, such as transient perturbations caused by lightning discharges, or switching on or off of some large power device, etc.).

But, in these cases, if the holes of the sieve get larger, the number of rejected outliers must diminish until almost no outlier is anymore rejected.

In contrast, when we deal with AE records, it is realized that the outlier number persists, and it is always quite large, even when a sieve is used with considerably large holes.

This fact denotes that the AE are intrinsically characterized by an asymmetric distribution - indeed this is what occurs for a lognormal distribution or more generally for a Kapteyn class distribution. The outliers may therefore be effectively interpreted like evidence of the fact that the crystal bonds in the system are going to yield while they organize themselves according to the aforementioned rationale of the "flaw domains". Every "flaw domain" generates a "tail", and its presence is singled out as the occurrence of an outlier.

As a conclusion, the outliers, their umber, their time series, denote the history of the evolution of the "flaw domains" which are associated with a given "$v$", and with that particular phenomenon which is in progress inside the solid material that composes a given structure.

Therefore, since the existence of "flash domains" has thus been observationally ascertained, the law of their temporal sequence can be investigated.

Their time series (which is composed of "yes" events independent of their amplitude) is of the well known type that in the literature is named "point-like process".

The needed algorithms have however been improved by the author (and co-workers) in order to apply them to data series which are much inhomogeneous and incomplete, such as it typically occurs for climatic time series, or for the time series of the historical eruptions of volcanoes (Pavese and Gregori, 1984; Banzon et al., 1990, 1992, 1992a, 1994a; Pavese et al., 1992; Gregori, 1997).

As far as the present application is concerned, two algorithms are to be specifically considered (for the mathematical details refer to the appendix).

The first algorithm is called *"ARPA"* (automatic research of periodicities and analysis), and it is aimed to single out the objective periodical components which are contained in the OUTLIER-3 sequence.

It essentially relies on the so-called "superposed epochs" method, although it is here applied to a point-like process (and it has been successfully applied by the author to climatic series, Pavese and Gregori, 1984; Banzon et al., 1990, 1992, 1992a, 1994a; Pavese et al., 1992; Gregori, 1997).

The algorithm has been applied to the AE records on volcanoes - and three different behaviors have been found while dealing with the three volcanoes which have been investigated (Vesuvius, Stromboli, Peteroa; cfr. Paparo et al., 2004, 2004a; Gregori e Paparo, 2006; Ruzzante et al., 2008). Every volcano is characterized by a comparatively much different tectonic setting. And it has been a great surprise to realize that Peteroa resulted to display - with a precision worthy of a high-precision chronometer - quite a few periodical components that seems to be justifiable only in terms of solid Earth's tides (Ruzzante et al., 2008).

In contrast, this algorithm was never applied to the study of materials (concrete, building materials, bricks, metal alloys, glass, fiberglass, carbon fiber, marble, limestone, etc.), and it appears very likely that this observational information will provide with some presently unknown quantitative indication suited to characterize the behavior of a solid microstructure.

With particular reference to metal alloys or to concrete etc., a tiny alteration of the percent composition by different components might determine, in principle, large changes of the behavior monitored by *ARPA,* when it is applied to the data series of the AE outliers. All this is presently unpublished.

The other algorithm has been called "Imbò algorithm" (cfr. the appendix), and is named after Imbò (1928) who formerly applied it to some historical data series of volcanic eruptions, and that, indeed, results particularly effective and significant.

The principle may be defined as being of "calorimetric" type, because it presumes that some (unknown) reservoir experiences a progressive "recharge" (dealing with something that does not need to be better defined) until it reaches a "threshold", after which the system releases "catastrophically" the entire content of its reservoir. On an intuitive ground, it is just the same process that occurs in a pressure cooker, which makes its security valve to whistle every time that the cooker pressure reaches a pre-chosen threshold, which is determined by the weight of the valve.

*ARPA* already resulted heuristically much effective in the application to AE series.

In contrast, the "calorimetric" criterion, over which the Imbò algorithm is based, does not appear - at least up to now - to be suited to match either one physical characteristic of the process that is responsible for the generation of AE and for the ageing of the material. Its potential effectiveness is likely to be exploited (maybe) only when the AE records will be measured with a much more detailed time resolution.

On the other hand, the Imbò algorithm can (and must) be applied as a routine analysis of every point-like process, as it is an objective tool that intrinsically contains *per se* one type of physical information, "filtered" through a particular rationale. Its interpretation - by integrating its evidences with other evidences - has the potential capability to focus on one physically significant aspect, which is different compared to all other physical facets of AE records.

## 5.6 Properties of "flaw domains" - Computation of the hammer effect, of the trigger threshold, and of the mean speed of formation and evolution of a "flaw domain"

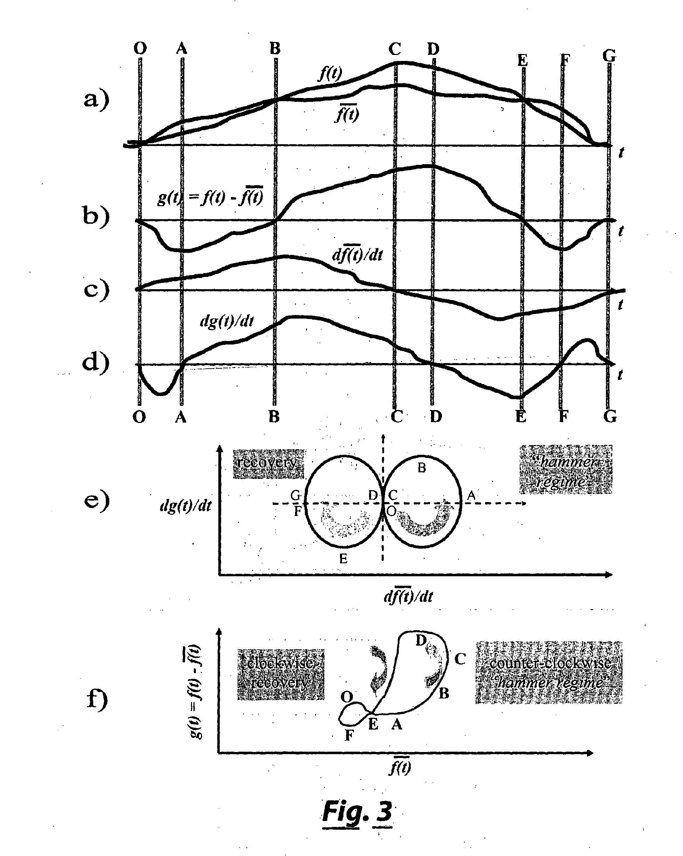

Refer to figure 3, where every plotted point corresponds to one measurement alone carried out at one given instant of time. Hence, the temporal evolution of the system is characterized by a trajectory.

In figure 3f this trajectory appears like an orbit with either clockwise or counter-clockwise curvature. Figure 3 is called in the following "hammer plot".

The explanation of figure 3 is as follows.

These are all sketches aimed to describe (with full rigor) the method of analysis.

The sketch in figure 3a shows a generic function of time $f(t)$, and also the same function denoted as $\bar{f}(t)$ after having been smoothed by means of a moving average (either weighted or not) over a moving interval of some given time lag. In addition figures 3b, 3c and 3d show, respectively, the residual $g(t)=f(t)-\bar{f}(t)$, and the time derivatives $\overline{df}(t)/dt$ and $dg(t)/dt$.

The sketch in figure 3e shows the (qualitative) plot with $\overline{df}(t)/dt$ in abscissas and $dg(t)/dt$ in ordinates, aimed to show that the point that describe the time evolution of the physical system will describe a clockwise orbit in the case of applied stress ("hammer regime"), and a counter-clockwise orbit during a recovery regime (that is, after having been subject to an external stress, or after having suffered by a "hammer stroke").

The sketch in figure 3f analogously and qualitatively displays the orbit displayed by the point which represents the evolution of the system whenever a plot is made with $\bar{f}(t)$ in abscissas and $g(t) = f(t) - \bar{f}(t)$ in ordinates. The hammer regime still corresponds to a counter-clockwise orbit, and the recovery regime to a clockwise orbit. The plot of figure 3f is called "hammer plot".

All this is perfectly rigorous, and in any case it is also easy to test it, for instance by means of an $f(t)$ defined by a mathematical expression with the analytic form of a lognormal distribution.

The width of the lognormal distribution is related to the curvature radius of the orbit.

Let us extrapolate this same criterion, from the case of one "AE event", to an elementary triplet of AE records collected at three consecutive instants of time.

Depending on whether the trend appears either counter-clockwise or clockwise, is will be possible to associate - to the time instant of the central point of the triplet - one instant index $H$. This will be arbitrarily put equal either to *+1* or to *-1* according to the curvature of the orbit, counter-clockwise (hammer regime) or clockwise (recovery regime), respectively. This effect has been named "hammer effect" (Gregori et al., 2007), in order to indicate that the system reacts differently depending on whether it is subjected to the application of an external cause (such as a hammer stroke), compared to the case in which the system is reacting during its recovery while it searches for a new equilibrium consequent to the perturbation that it had to suffer (that after having received the hammer stroke).

The index $H$ is called "hammer index".

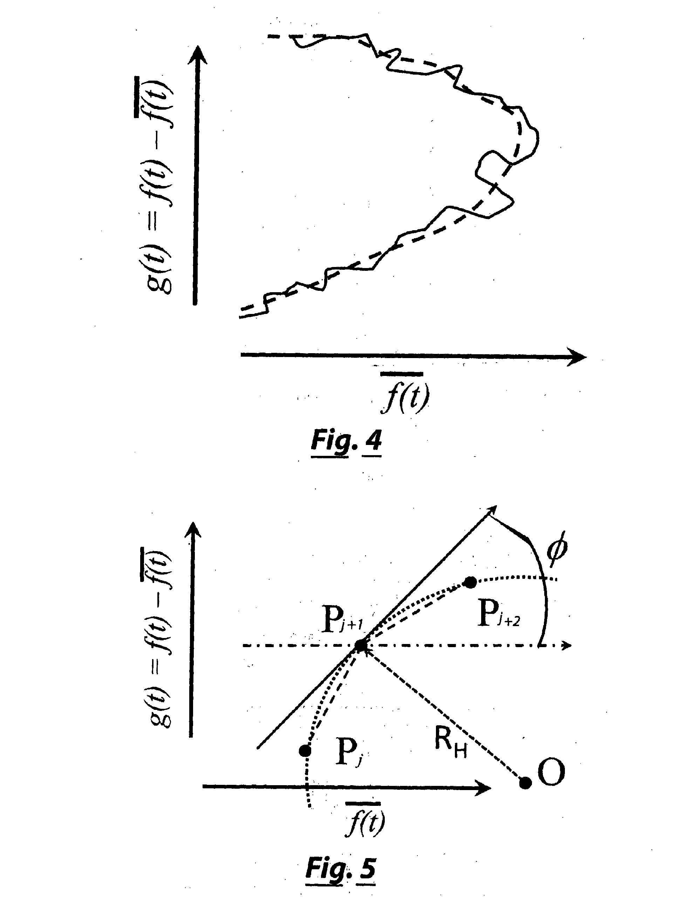

In this way it is thus possible to monitor - with continuity and almost in real time - the time history of the $H$ value. If we take for granted the possibility that the points may result to be somewhat scattered along the orbit, due to disturbances to the structures originated by the natural perturbations, it is possible in any case to assess a mean curvature, being either clockwise or counter-clockwise, which represents in some way the statistically averaged trend of the system during a given time internal. This concept is schematically represented by the sketch in figure 4.

This statistical averaging may be obtained by evaluating for instance the average of $H$ over a moving time-window of pre-chosen total duration, of a size such that the largest part of the scatter is smoothed. This smoothing ought to be suited to cancel the largest part of the apparently erratic scatter of the plot of $H$ vs. $t$.

This resulted to be an effective and significant way to assess the role of the physical presence of "flaw domains", which characterize the evolution of the system (in terms of the aforementioned analogy, this is a way to measure the temperature of a gas starting from the kinetic energy measured for several molecules of the same gas).

This procedure has been applied for the first time in Gregori et al. (2007).

In contrast, the curvature radius $R_H$ of figure 3f has never been considered, and it is an objective measure of the width of the distribution that, as a first order approximation, is described by a lognormal. This curvature radius is the radius of the osculating circle to every sequence of three consecutive points on the "hammer plot". Hence, this $R_H$ will be briefly denoted as "osculating radius".

By this, an index is defined which is related to the mean speed of formation and evolution of one single "flaw domain", which will therefore called $R_H$, or even more briefly it will be called "flaw index" and denoted by $F$.

This last application has never been published, and it is totally innovative. The simple associated algorithm, based on elementary concepts of Euclidean geometry, is highlight in figure 5. Given three points $P_{t-1}, P_t$ e $P_{t-1}$ on the hammer plot, which are in chronological order and correspond respectively to the time instants simply denoted as *t-1, t* e *t+1,* let us evaluate the radius $R_H = \overline{P_l O}$ of the circumference drawn through $P_{t-1}$, $P_t$ and $P_{t-1}$. This $R_H$ is directly correlated with the mean width of the distribution of lognormal type which is characteristic of a "flaw domain" associated with the frequency "$v$" of the AE being considered. This concept, as well as the rationale of the "flaw domain", have never been used or published under any form.

One additional parameter that seems to have a great heuristic potential is the orientation of the tangent to the osculating radius. It will be denoted by $\phi$ and it is reckoned counter-clockwise with respect to the direction of the x-axis in the "hammer plot". This $\phi$ direction is along the perpendicular to the osculating radius drawn through point $P_t$ in figure 5, and oriented along the direction through $P_{t-1}$, $P_t$ and $P_{t-1}$. The relationship between $R_H$ and $\phi$ results much important to clarify the detail of the statistical evolution of "flaw domains".

Summarizing, *H* monitors the time sequence of the sequence of "flaw domains" of progressively increasing size. In addition, $R_H$ and $\phi$ measure the mean speed of formation and development of every single "flaw domain", while the Imbò algorithm, which however applies only when the "calorimetric" rationale holds, can investigate the trigger threshold for the formation of a "flaw domain". The temporal detail, which can be achieved, is however controlled by the temporal resolution that is requested during the data acquisition of the AE records. Finally, $D_t$ measures the ageing stage of the material, while *ARPA* singles out the intrinsic periodicities of yielding process of microcrystal bonds inside the structure of the material.

Whenever the data acquisition of the observed AE is carried out with a time resolution sufficiently sharp, in principle it might be possible to monitor an instant *H* right at the very beginning of the development of a single "flaw domain".

It has however to be stressed that the effectiveness of a "method" does not rely on giving a rule that - almost like a juggler - ought to provide with the solution of a given problem.

The effectiveness of a method is rather in its capability to provide with a logical "recipe" by which, whenever an applicative problem is posed, it is possible to clearly assess - with a correct feeling of the basic physical aspects and with logical rigor - to tool which is heuristically more effective and suitable to the case history of every specific problem that has to be solved.

According to this viewpoint, the method of the present invention is intrinsically deeply innovative, either compared to all what has been published up to now by the author and co-workers, or compared to all what can be found in the literature, at least according to almost half a century experience by the author.

## 5.7 Particular case histories: oxidation, electrolytic phenomena, hysteresis cycle - Metallic and non-metallic materials

A peculiar discussion is required concerning particular phenomena that, in principle, may open the way to ascertain much important potential diagnostic tools.

The crystal structure of a solid can experience a degrading not only depending on the mechanical stress, by also by oxidation (rusting), or by electrolytic action, or during a cycle of magnetic hysteresis.

The phenomenon dealing with the hysteresis cycle has already been measured in the laboratory, and it is believed that it is also possible to measure phenomena associated with oxidation or electrolysis.

This problem however, does not partake to the discussion of the present proposal of a patent, as it is rather a concern of sensor sensitivity, of amplification of the detected signal, and also of the propagation of the AE signal through the medium which is monitored.

For instance, the (sometimes even devastating) role is well known of electrolytic phenomena generated by the telluric currents associated with railways or tramways or subways when they are DC powered.

The damages which sometimes are quite conspicuous - deal either with metal pipes of the water or gas supply network, etc., or also telephone cables underground.

If it possible, in principle, to measure the AE caused by an electrolytic phenomenon, the AE signal ought to be propagated reasonably well along the metal pipe, while it is not equally sure that it propagates along a telephone cable. Indeed, this propagation depends in a critical way on the composition of the cable, which is normally much complicate. The check is in progress of the real feasibility of the application of the method to monitoring the damage which is suffered by a telephone cable due to electrolytic phenomena.

In general, the method of the present invention can be directly applied every time that the measuring technique allows to detect a time series of AE measurements, which ought to be presumably associated with a given phenomenon. The method of the invention carries out in any case the analysis of the AE data series *per se.* In contrast, the physical trigger derives from other physical drivers, and their knowledge is essential in order to interpret the nature of the ongoing damage, and in order to decide how to manage any unwanted drawback.

These much general comments apply to a variety of situations, and only a few of them are here listed like examples.

In general, every metal object is therefore subjected to crystal alterations that may derive from a sum of phenomena either chemical (such as oxidation, rusting), or of magnetic hysteresis, or of electrolytic nature.

A suitable preliminary calibration will probably allow for the proper assessment of a "signature", which is suited to distinguish every kind of phenomenon compared to others. The calibration may also be dynamic, and carried out at regular time intervals.

Concerning the case history of an iron rod inside a reinforced concrete structure, let us suppose that we afford to detect the AE signal associated with iron oxidation at the iron/concrete contact. This signal provides with a potential effective index of the stage of the eventual degrading of the performance of that block of reinforced concrete, due to the time varying adherence of the rod with its surrounding medium (for instance, this phenomenon might perhaps precede the concern about a possible disintegration hazard of the structure).

In addition, let us suppose to trigger, by electromagnetic induction, a hysteresis cycle inside this rod - although this does not necessarily imply that we must request direct exposure of the rod, as in principle we may just apply a simple electromagnetic signal at a distance.

It is therefore possible to hypothesize to use such an AE - triggered by electromagnetic induction into a rod located inside a reinforced concrete structure - much like in the case the rod is an active AE source. That is, this is much like it happens in a conventional tomography by ultrasounds, suited to monitor the ageing of the concrete that surrounds the rod.

In addition, this information may be integrated, at the same time and whenever possible, in order to recognize the superposed signal, which is associated with the oxidation of the rod, which is indicative of the adherence of the concrete to the rod. In principle, this possibility might be real and feasible, after having carried out a suitable set of laboratory measurements for a proper assessment and calibration of its physical interpretation.

The same principle - in terms of AE stimulation by means of a hysteresis cycle by electromagnetic induction - may be applied to every periodical or occasional monitoring of metal components of mobile structures, as mentioned at section 5.2/II. This a very rapid procedure, which is non-invasive. It triggers a feeble stimulation for the release of AE suited to carry out a diagnosis, which is very rapid and practical, for instance to test a large fleet of rolling stock of a railway network of either national or continental scale size.

These potential applications are therefore of concern for every metal component, (such as a crane, a viaduct, an oil platform, the component of every machinery, tanks operated at high pressures, or the backbone of a railroad car, or of any other mobile vehicle, or of a ship, of a submarine, of an airplane, etc.), or to the pipe of a distribution network for water or gas, or (*mutatis mutandis*) maybe even of a networks of underground telephone cables, etc.

Much different and much specific items are to be considered when dealing with large pipeline systems, such as the pipelines for oil or gas.

A great concern deals with the conspicuous damage, either in terms of financial loss or of operative difficulties, originated by the rupture of the pipeline, with consequent flux interruption and /or loss of fluid.

Typically, a pipeline may suffer by an interruption due to *three kinds* of causes, and the application of the method of the present invention requires therefore a suitable approach, suitable devices, and suitable procedures for every kind of damage.

    a. The damage derives from a very slow process, such as the subsidence of the ground which supports the pipeline, or an overloading caused by an overlying landslide. In this case, an AE signal will be recorded that displays some characteristics which progressively, and slowly, change in time, until they reach the condition for an eventual collapse. The time scale of these phenomena is typical very long. It is therefore necessary to be able to asses with a suitable time advance - and by remote monitoring (these pipelines as a standard cross non-inhabited and/or desert areas through huge distances) - in order that it is possible to issue a reliable alert and to send a rescue team before pipeline interruption.

    b. The damage occurs due to an intentional action carried out by making a hole in the pipeline by means of a drill. The damage occurs in a matter of a few ten seconds. It is necessary to recognize, in a reliable way and by remote sensing, the location of the event, in order to be able to send a rescue team for a prompt pipeline recovery.

    c. The damage occurs due to an intentional action carried out, however, by making a hole in the pipeline by means of a steel chisel and by a much rapid stroke (for instance by means of an explosive operated striker).

The damage occurs in a matter of a second. The requirements are similar to the case history of an intentional action carried out by a drill. However, the rapidity of the perforation is such that the remote sensing of the AE signal must be carried out with an adequate time resolution - which is much sharper compared to the previous case history - in order to be able to assess, in real time and with a high reliability, the location of the intentional action.

Also in the case of a pipeline it is certainly possible to apply the method of the present invention.

The new complication is only concerned with the need to deal with phenomena that occur with typical time scales which are comparably much different. The concern is not about a natural phenomenon, rather about a manmade intentional action, implying the consequent variate determined by his "fancy".

Data acquisition must therefore be carried out accordingly. Serious problems derive from the need to handle huge amounts of AE records that have to be analyzed in different ways depending on the kind of damage that has to be assessed.

In addition, as we have to operate in real time and also steadily with no time gaps, the computing times get very important.

In general, there is need to foresee a "rapid" analysis, suited to carry out a first "screening" of the information, suited to assess an eventual pre-alert.

When a suspect exists of the occurrence of a damage, the AE records have to be re-analyzed according to more cogent criteria in order to validate (or not) the alert.

Finally, it will be thus possible to issue an alert that will trigger the intervention of a rescue team.

Consider, however, that a false alarm may imply great costs. Therefore, it is much important to calibrate with great care the application of the method of the present invention, and of all its algorithms, in order to reduce the hazard of false alarms - in principle false alarms *per se* can never be excluded with absolute certainty, much like it always happens for every monitoring method for every kind of phenomenon.

It is therefore fundamental that every specific application to every given pipeline must request a precise devoted calibration.

Indeed, it is necessary to assess the distance - along the pipeline - of the location of the several AE sensors to be operated. This distance depends on the type of pipe which is used. The transmission or damping of the AE signal along the pipeline occurs by prevalent surface propagation. Surface propagation depends therefore on the metal composition of the pipe, on the thickness of its wall and on its geometry, and on the environment of the pipe where it is located or posed (either over ground, or underground, or submarine, etc.).

In addition, the noise is well known, which is originated by the stones embedded in the oil, which flows inside the pipeline, and which strike against its walls. This noise can be clearly recognized, compared to the signals released by the metal while it is degrading or it is going to suffer a rupture. On the other hand, the useful AE signal damps off with the increasing distance between the AE source and the AE sensor, while the noise caused by stones occurs everywhere along the pipeline. Hence, it is necessary to take into account the signal/noise ratio in order to carry out an application of the method of the present invention, which must conform with the real need of the user.

These potential applications - much like it has been mentioned in section 5.5 concerning alloy metallurgy or the composition of cement or of concrete - are here listed in order to clarify how the method of the present invention has a wide fan of potential uses. But the operative detailed definition has to be carried out while referring to every specific case history, related to the practical observation and acquisition of an AE data series.

Differently stated, it is necessary to distinguish the technological problem of the detection and measurement of the AE signal in every different circumstance and on different components, upon taking into account both the intensity of the source of the AE signal, and its successive propagation, or damping, between source and detector.

Whenever this problem has been solved - and all this deals with a technical and instrumental aspect which is not directly concerned with the method of the present invention - the method of the present invention can be promptly applied after having carried out the suitable calibration and definition of the parameters needed for its algorithms.

Successively - after having considered the signal/noise ratio which is specific for every given specific application - it will be possible to assess the quantitative and physically well defined parameters, suited to provide with objective and quantitative diagnostic elements that must be precise, specific, and of real relevance, either for security purposes, or for a diagnosis of unpredictable events, aimed to prevent or to mitigate every unwanted consequence as soon as possible.

## 6. Potential applications,

As a conclusion, let us attempt to summarize as follows the wide fan of potential applications of the method of the invention.

Humankind and its security, from every viewpoint (living home, working site, vacation, transports, services, supplies, .....), depend in an essential way on structures which are composed of solid objects - which are therefore prone to ageing and consumption.

Therefore the potential applications of the method of the invention deal with almost every aspect of the life and security of everybody.

For simplicity, let us concisely list four kinds of applications.

## 6.1 Steady, real time monitoring of structures - Management by means of fixed sensors

This is the comparably most frequent and most common case history. It applies every time that it is possible to locate a sensor at a significant site to monitor the AE signal released by some parts of the structure which is practically subject to an applied stress and therefore to a consequent loss of performance.

This holds either for laboratory tests carried out on sample structures, or also for field monitoring.

The control is carried out by remote sensing, from a control room, which can keep under control - and simultaneously - a huge number of measured points.

The operative costs of the service may thus be substantially reduced.

Consider that this monitoring may be carried out not only on specific materials (concrete, metal, wood, carbon fiber, fiberglass, marble, rock, glass, ceramics, bricks, ....) but also on particular components, such as the iron rod inside reinforced concrete, which may be used either passively in order to detect the AE signal associated with its oxidation, or also actively, when it is excited by magnetic hysteresis as explained in detail in section 5.7.

This procedure may be applied to house buildings, or to buildings devoted to specific purposes (stadiums, theaters, conference centers, etc.), or to railway or highway viaducts (made either by concrete, or by metal, or by wood), to brick buildings, to oil platforms or similar constructions, to any kind of machinery or of particular transport vehicles (tanks operated at high pressures, boosters, airplanes, submarines, refer in this respect to items II and III), or to the monitoring either a hill face prone to landslide hazard or an embankment of railways or highways, or dams and their hazard related to hill faces that may cause a landslide, or soil exhalation of endogenous gas (such as cattle die-off when it is enclosed by a fence, security for people living at the ground floor in house where occasional underground noise is listened, etc.), monitoring of endogenous phenomena (hazard by potentially harmful fumarolic activity), variable fluxes of underground fluids, monitoring precursors of volcanic activity, seismic precursors, regional, continental, or planetary monitoring of crustal stress propagation, phenomena related to variation of porosity in the crust and/or lithosphere originating effects that control gas exhalation of endogenous origin and climate, etc.

For instance, concerning the climate issue, at present a manifestly insufficient knowledge and monitoring is available about the spacetime variations of endogenous energy exhalation from soil into the atmosphere, which is a likely cause of the present unpredictability of several different kinds of violent meteorological anomalous events. Spacetime variations of soil porosity monitored by an AE network can provide with one effective information about this concern, in addition to other suitable measuring devices.

As far as brick buildings are concerned, the method of the present invention can certainly be applied, but every given case history has to be specifically considered alone, upon considering the kind of mortar that has been used, as it causes a different damping of the AE signal. Therefore, much different is the case of monitoring buildings of historical or artistic interest - as they are often constructed by means of heterogeneous techniques and materials, for which it is therefore awkward to classify their behavior -compared for instance to the small brick bridges, which are often found in the railway network, and which are likely to have been constructed according to a few reasonably well known standards, etc.

### 6.2 Occasional monitoring of the reliability of structures - "Management by mobile sensors"

This is the same item already mentioned in section 5.2/II, analogous to the well known periodical test required by law for every car.

When dealing with particular structures (for instance cranes, rolling stock such as the axles of rail cars, etc.) it may be unpractical, from different viewpoints, to refer to AE sensors permanently fixed at particular points.

The concern may derive from the mobility of the structure, which implies problems dealing with the transmission of the signal to a control center. This is certainly possible, although the costs might become exceedingly heavy, either due to the required instruments, or due to management and operative problems.

In addition, the degrading of the mobile structure occurs very slowly, and an occasional test is therefore sufficient, with a prefixed timing, according either to a periodicity criterion, or related to the more or less intensive job required to the machinery, vehicle, or else.

Fundamental and critical parameters for the management, and for the cost, of this service will be concerned with the operative times required to carry out one single test, and with the accessibility of the point to be tested.

For instance it is well known how to carry out a tomography by ultrasounds to the axles of rail cars. But this test requires an unrealistic time and cost, upon considering the size of the international fleet of rolling stock.

Much different will be the problem whenever the test will be rapidly feasible by means of a portable instrument, by checking in situ the reliability of materials by means of a rapid inspection, being thus capable to release a prompt verbal of the control by specialized personnel, according to a routine and standard protocol and service.

### 6.3 Mixed case histories - "Mixed management"

When dealing with a few specific case histories (for instance monitoring the security of a crane, of an airplane, of a ship, of a submarine, of a drive-car of a train, of particulars vehicles such as trucks, formula one cars, special rescue vehicles, military vehicles, boosters, mobile components of oil platforms, etc.) the possibility has to be considered to refer both to fixed sensors located at points of the structure which are particularly significant - and which might be eventually difficult to be occasionally tested as they are located in internal parts of the structure, or could even be not reachable by a portable sensor - while other components of the structure may be tested by an occasional test.

This type of choice - which in principle holds for every kind of machinery - will permit to optimize the ratio of cost/information.

The cost has to be taken into account of the instrumentation, of the management of the monitoring service in terms of the needed personnel, of the storage of the AE records, and of the eventual supplementary decision concerned with the need for an additional improved analysis, a *posteriori,* of the AE records, etc.

A mixed management may result sometimes much more convenient compared to a mere either "fixed" or "mobile" management.

## 6.4 Special case histories, intentional events, etc.

A specific concern is required while dealing with particular exigencies, such as when there is need to monitor by remote sensing some intentional actions, typically the case histories of a damage to long pipelines for oil or gas, which cross through desert and much far-away areas.

The damage may derive either from natural causes, or by intentional actions (aimed, for instance, to steel oil or gas). In both cases there is need to issue an alert from some large distance and with a suitable timing. The alert has to specify the damage - which is ongoing or it has just occurred - and also its type, while the hazard of a false alert has to be minimized, by taking into account the cost of the damage, and also the damage of a false alert with the consequent useless intervention of a rescue team.

Refer to the details given in section 5.7.

In principle, all this a certainly possible in a strict sense. However, every specific case history has to be studied *per se*, and the target is always to minimize the hazard of an eventual false alert, which in principle is in any case a concrete possibility.

A few algorithms have already been implemented and, as far as possible, tested in the laboratory, although it is impossible to give a general formulation, suited for every possible hypothesis of application.

Another special case history is represented by the study of alloys or of different types of cement or of concrete, etc., upon considering that some specific intrinsic periodicities of a given material (metal alloy or other) are presumably strongly conditioned by the presence of very tiny quantities of "doping" components. This also represents one potential great result derived from the algorithm *ARPA* applied to the series of outliers.

Another special case histories is represented by the possible applications of the AE originated by phenomena of oxidation, or of electrolysis, or of magnetic hysteresis, or by the applications to distribution networks composed of metal pipes, and (perhaps) also telephone cables, as specified in section 5.7.

Also the geophysical applications - which were implemented at the beginning of the present study that has led to the full exploitataion of the method of the present invention - partake to the category of special applications, due to the very poor knowledge of the actual structural details of the physical system that has to be monitored (such as for instance the tectonic setting of a territory, crustal stress and its different propagation and spacetime variability, the structure and composition of the volcanic edifices and the spacetime variation of the pressure by the endogenous hot fluids, the nature, composition, temperature, etc. of the endogenous fluids of climatic relevance, etc., the geological and hydro-geological features of the hill faces that impend over villages or dam reservoirs, the "rooting" of a glacier on its bedrock depending on the spacetime variation of endogenous fluid exhalation, etc......).

Every specific case history has to be considered and evaluated independently, upon taking into account the cost for installation and for the operative surveillance, and also the relevance of the hazard .... everything deals with an evaluation of the ratio cost/benefit.

Much different is the case history of monitoring a volcanic edifice, where a reduced set of sensors is certainly sufficient to monitor the temporal variations of the endogenous fluids and the performance of the structure that "tap" the internal pressure (similarly to a security valve of a pressure cooker).

Much more complicate is the case history of monitoring the crustal stress in view of the seismic hazard of a given area. Indeed, this, unlike for a volcanic edifice, is not a local phenomenon. Rather it deals essentially with the planetary scale. Differently stated, the effectiveness of a monitoring for this purpose will be strongly conditioned by the availability - or not - of a suitable planetary network of simultaneously operated AE sensors. Continental or planetary AE arrays are also required for climatic applications and for improving its predictability.

This means that these problems constitute an object of an essentially much advanced frontier in scientific research in geophysics, and of the global monitoring of the entire planet, even before being the concern of the national Civil Protection of every country.

It should also be recalled - and emphasized - that, in contrast with a false expectation which is erroneously very diffuse among public opinion (and also in some more learned environment), it makes an unrealistic nonsense to consider the possibility to issue a "forecast" or "prediction". This warning applies either for AE monitoring or for any other observational information.

Indeed, it makes sense to talk about a "diagnosis" of a physical system (either Earth's crust, or volcano, or hill face, or the performance of a machinery, of a building, or of any manmade physical system, etc.), much like it makes sense for a medical doctor to diagnose a patient, while he can never forecast the exact time instant of his passing away.

## 7. Some comments about the operative application of the method

It should be stressed, first of all, that the method of the present invention is not concerned with one single given instrument that, almost like a "magician", provides *sic et simpliciter* a diagnostic information that can be promptly used.

The problem, of a dynamic characterization of a solid structure, deals rather with the diagnosis of a physical object. All this intrinsically involves numerous facets. In general, several features are not either directly or indirectly observable. The method of the present invention shows how it is concretely possible to monitor - quantitatively, simultaneously, and in real time or almost in real time - a conspicuous set of critical and fundamental aspects of the problem.

The physical object, which is being monitored, may be subject to ageing and loss of performance and/or reliability, depending on different primary causes. The versatility of the method ought therefore to allow to manage every different potential problem, by identifying the possible causes of the degrading of the structure.

However, different primary causes request the use of different algorithms.

Therefore, given an object which has to be monitored and diagnosed, the method of the present invention provides with all needed tools, which are strictly and operatively necessary in order to reply to the requirements by the user and by his needs.

There is nothing "miraculous", neither it is possible to provide with any observational parameter that, alone, can give a reply for every potential need. Every problem has to be focused in its intrinsic nature, and the applicative procedure must be promptly identified and applied in an almost automatic way.

In terms of an analogy, every kind of diagnostic tool in medicine has to be applied in a different way depending on the kind of pathology of the patient (age, sex, anamnesis, etc.).

In order to clarify this essential aspect suited for an operative definition of the method of the present invention, a few case histories are here described in what follows, like examples, although they do not cover the entire applicative spectrum.

### 7.1 Field measurements, simple buildings, viaducts, landslides, etc.

Field measurement are carried out to monitor precursors of seismic or volcanic activity, or of landslides, etc.

The AE sensor is used in close contact with a rocky outcrop (or with a solid object that emerges from soil). In general, the underground extension of this solid object is unknown. Hence, we cannot know the actual volume that we monitor, as we cannot know the amount of the damping of the AE signal between the AE source and the detector.

In this case, a raw computation of the $D_t$ parameter is carried out that, in some way, monitors whether the system manifest any sign of ageing, independent of the real structure that effectively releases the AE signal by which we carry out the diagnosis.

We cannot know what is going to happen, but something is presently going to occur, independent of the structural detail of the monitored object.

The same comment applies to the case of a building which is going to collapse.

In addition, we can have an alert with a long advance time, and we can well foresee a conservative intervention, or an ordered abandoning by people including their goods, etc.

This holds also for a viaduct, when its concrete is going to yield, or when it has much deteriorated metal structures.

That is, in all these case histories there is need for no particularly detailed diagnostic information. The system is going to yield, and there is need for an intervention before its catastrophe. The $D_t$ may suffice.

The control occurs by a remote monitoring in real time from a remote control room, in an automatic way, and with minimum operator surveillance.

### 7.2 Occasional check

Comparatively much different is the case history of an occasional or periodic check (to be carried over a crane, or on a component of a rolling stock such as the axle of a rail car, etc.).

Occasionally, by means of a portable instrument, we gently excite an AE release and by it, through $D_t$, we assess whether the material which composes the object effectively responds to the excitement, or whether in contrast it has suffered ageing, such as to cause a loss of performance by that component.

The diagnostic procedure is similar in every detail to the previous one. The unique difference relies on the way the measurement is carried out. In the present application it is an occasional measurement carried out by a portable instrument. In the previous case history the measurement was permanently carried out at fixed and pre-chosen point, in real time, monitored by a remote control room.

### 7.3 A "formula one" car, a booster, an oil platform, etc.

Let us refer to the case history of a Ferrari car. When a prototype has been constructed, it is tested by running it for thousands kilometers on a circuit, then it is disassembled, and all metal components are investigated which denote comparatively lesser reliability, in order to improve them and to ameliorate the reliability of the whole car, etc.

Let us suppose that an AE monitoring system is installed on some critical components of the car. The performance loss of that component can thus be remotely monitored by technicians in real time from the paddock.

By this, the concern is not about the assessment of the component which is more or less prone to yield. Rather one want to know the cause, the speed of the loss of performance, whether there is a sum or not of concurrent causes that accelerate or delay the degrading, or rather if its performance may be changed upon changing the metal alloy by which it is made, and finally we want to know (if possible) the time instant at which the degrading begins, etc.

All these diagnostic information can be provided by the method of the present invention according to the following prescriptions.

The $D_t$ parameter provides only with the indication on the final stage of the degrading. It is of little use concerning other details. It gives a result that, compared to all other information, is only a conclusive summary.

The hammer effect, that is $H(t)$, $R_H(t)$ and $\phi(t)$ provide with a measurement of the average speed of the degrading of the structures, which occurs more or less rapidly during the various phases of the car test.

The osculating radius $R_H$ and its relationship with $\phi(t)$ specify instead, in real time, what is the mean yielding speed of a single "flaw domain", while $H(t)$ only gives an information averaged over the ensemble of all "flaw domains" that enter into play.

The instant value of $H(t)$ - if the temporal resolution of the AE record has a sufficiently rapid timing (compared to the typical timing of degrading) - may also permit to recognize the time instant when the development begins of a "flaw domain", while $R_H(t)$ and $\phi(t)$ provide with a much more detailed additional information.

*ARPA,* when it is supported by a preliminary calibration carried out in the laboratory on metal alloy samples, may focus on whether the cause of material degrading depends on the kind of alloy which is used, and therefore on whether it is possible to envisage in this way what kind of alloy may eventual result to be better suited to hold a given kind of stress, etc.

At last, the reasonable doubt may be raised that, during a long test or during an affective car race, different causes altogether sum up until making the system to reach a threshold after which its performance and reliability rapidly degrade. That is, a threshold effect occurs (much like it occurs for instance in a calorimeter, or in a pressure cooker, where the security valve whistles whenever the internal pressure overwhelms the weight of the security valve). The Imbò algorithm perfectly conforms with this exigency.

The interpretation procedure is then to be adapted to the case of every specific component to be monitored. Its loss of performance may also depend on its geometry, on the kind of the either mechanical, or chemical, or thermal stress, etc. which is applied. The method of the invention is much versatile, as it relies on a concrete physical interpretation, and it does not simply rely on a simple "black-box" empirical monitoring concerning the physics of the problem.

As it can be realized, this application is much different compared to the previous ones, and indeed it is the whole ensemble of the diagnostic parameters to provides with an effective diagnosis suited for the needs of the user.

The same procedure is applied for instance also to the case of an oil platform, or of a booster, either to monitor the performance of the container of the propellant, or to prevent unwanted detachments of the supports of the booster that hold it fixed to the main rocket, etc.

### 7.4 A pipeline

A still much different case history is represented by the control of a pipeline, as already explained in section 5.7.

A performance loss of the system may depend on different causes, either natural (and with a very slow dynamic evolution), or due to intentional action (and in this case they are rapid or very rapid, depending on the technique that is used).

The predictability depends on the much different multiple possibilities of the causes of the "catastrophe" of the system.

Upon considering the mechanisms that can be responsible for the damage to the pipeline, it is possible to assess the "signatures" that permit to recognize where the damage has occurred, and by what cause.

The environmental disturbances - typically the noise caused by the shocks of the stones contained in the oil - are to be accordingly treated, mostly concerning the optimization of the signal/noise ratio, etc.

Every problem has to be solved upon considering the primary mechanism of phenomena, much like it happens for the aforementioned Ferrari example, neither it is worthwhile to enter into the operative details that have to be exploited for every single application.

### 7.5 Chemical or electrolytical degrading

As far as these much specific applications are concerned, the first problem to overcome is represented by the detection and record of the AE signal. This depends on specific factors of every single system to be monitored. This is just a technical problem that *per se* is not pertinent to the method of the present invention. In general, often it will be possible to detect this AE signal, on other occasions it might be impossible.

When this difficulty has been overcome, the analysis of the AE signals has to be exploited conforming with the specific exigencies of every given case history. The Ferrari car example shows how different types of damage, which is suffered by the investigated object, may request different algorithms and different prevention criteria, etc.

The versatility of the method of the present invention is its intrinsic, primary, and qualifying characteristic.

### 8. Appendix - Five algorithms,

### 8.1 SALTO

This is a simple algorithm defined as follows ("SALTO" is the Italian term for "jump" or "step-wise variation").

Let us arbitrarily choose a given suitable time interval $\Delta t$, and consider for every moving time instant $t_m$ the average of all records carried out at every instant of time which either precedes or follows $t_m$ by less than $\Delta t$. That is, consider the two averages of all records measured, respectively, during both time intervals $[t_m - \Delta t < t$

< $t_m$] and [$t_m$ < t < $t_m$ + $\Delta t$].

When the difference between these two values is (in absolute value) larger than a given and pre-chosen threshold, it is claimed that a discontinuity occurred in the "natural probe" which transmits the AE signal from its source through the point where the sensor is located.

The definition of every aforementioned arbitrary parameter has to be optimized in every case history. As a first step, a visual recognition has to be made on the plot of the AE records, while dealing with a few real observations. Subsequently, we will attempt to find a way in order to make SALTO to carry out the same selection procedures that visual inspection does perform.

Two comments have to be stressed.

I. The concept of "natural probe" was correctly defined - as mentioned in section 5.1 - for the case history of a monitoring in the field of a natural structure, where indeed this phenomenon has been observed several times and under different circumstances. In the case of experiments carried out on manmade structures (either in the laboratory or not) this phenomenon - whenever observed - very likely should be interpreted according to a much similar rationale. A discontinuity of this kind will in fact occur every time that a "catastrophic" yield occurs of some component of the system (even of an apparently irrelevant size). Therefore, we keep also in this case - in terms of an analogy - the same term "natural probe" suited to denote that the solid body transmits (with eventual damping) the AE signal released by its respective (unknown) source up to the detector.

II. A second comment deals with the role of the outliers. One eventual spurious record - and of intensity which appears definitely anomalous and non-physical, caused by some disturbance inside the circuits of the electronics of the system - unavoidably produces absurd mean values, with the hazard of misleading and false inferences. Hence, the algorithm SALTO is to be applied to the data series only after having rejected the first series OUTLIER-1, which contains - as explained in section 4.2 - the case histories of the "tails" originated by "flaw domains". In any case, since the identical criterion is applied while computing the average either before or after an eventual discontinuity, the effectiveness of SALTO is not hampered by having thus implicitly excluded the aforementioned "tails".

### 8.2 GMPD - "Geometrical mean of probability density"

Some classical concepts are here recalled, which are well known since almost two centuries, and which were formerly defined by Gauss.

Owing to the central limit theorem, every series of measurements has to display a normal (or "Gaussian") distribution, and this implies that every measurement is associated with a probability density.

When a set is given of $N$ measurements of the same physical quantity, a "likelihood function" is defined as the product of the $N$ probability densities, everyone associated with one single measurement alone of the set which is considered.

Given $N$ AE records, let us compute their likelihood function, and let us evaluate its $N$-th root. This is the geometric mean of the $N$ probability densities. Let us call it $B(N)$.

Given $N$ AE records, let us compute their mean, and for every single record also compute the absolute value of its deviation with respect to such a mean.

Let us refer to that specific AE record that, among the $N$ given AE records and compared to all other records, has the largest deviation in terms of absolute value.

Let us tentatively reject this record, thus considering only the remaining [$N$-1] AE records.

Proceed as before, until a new $B(N-1)$ is computed. And so on.

Iteratively proceed and progressively reject an ever increasing number of elements of the original set of AE records, which are always selected according to the same aforementioned rationale.

Let us say that - at some given iterative stage - we have rejected $k$ AE records. A value $B(N-k)$ will have thus been computed.

Let the iterative process to be stopped for a suitable $k$ (for instance choose $k=20$, but this is irrelevant).

Consider the plot of $B(N-k)$ vs. $k$. Just by a matter of definition, the plot will certainly result monotonic and increasing.

Let us suppose that the original set of AE records contains a true number $h$ of outliers. It will be found that the plot of $B(N-k)$ vs. $k$ displays a step-wise increase just for $k=h$.

A suitable criterion has therefore to be chosen such that the software can recognize this step-wise increase (and by this we avoid the need to plot every time an actual plot to be visually inspected). In this way, the $h$ outliers can be concretely rejected and included into its corresponding file (i.e. into OUTLIER-1 and/or OUTLIER-2).

It should be pointed out that, in this way, one and the same AE record may be identified several times like outlier, because one and the same AE record is included into several subsets, every one centered on different time instants, according to the detailed procedure mentioned in section 5.3.

It is therefore necessary to "clean" *a posteriori* the output file, which formerly includes all rejected outliers, as one and the same record may appear several times in this list. That is, we have to exclude and reject the elements that are repeated several times, as every element must appear only once in the "cleaned" set. In principle, it is even possible - whenever needed - to define also a hierarchy of outliers, according to whether they are more or less "bad", depending on how many times every element has been rejected like outlier.

At last, the list of the remaining outliers will have to be chronologically ordered before carrying out every additional analysis.

It should be noted that the assignment of quality of "outlier" or not to a given observational AE record intrinsically depends on the time rate by which the records are carried out. Indeed, if the measurements are carried out at some very short time intervals, in general one finds several measured values that change smoothly, and no record will thus be identified like "outlier". In general every natural phenomenon always changes with continuity during every time interval, which may be even very brief, although never of physically null duration.

But, if the same measurements are carried out at a time rate which is slower compared to the typical time scale of the variations of the system, one record may eventually appear to be isolated, and in this case it will be rejected like "outlier".

It is clear, however, that this logical bias does not hamper the significance of the outlier analysis which is here envisaged.

For completeness sake, let us recall that the algorithm T5 is analogous to GMPD, but it uses, in place of $B(N-k)$, a different parameter, i.e. the 95% confidence limit of the distribution, which is supposed Gaussian, of the remaining [$N-k$] records after having tentatively rejected $k$ of them according to the aforementioned iterative procedure.

The computing time for T5 is however comparably much longer and the computer program is much more involved. The final result is comparable with the GMPD result, and certainly no effective (either logical or practical) advantage of any kind seems to favor the use of T5 instead of GMPD.

In contrast, the Chauvenet criterion relies on the rejection of all records that fall outside a total prechosen probability which is arbitrarily chosen, and which is a function of the original number $N$ of records. The Chauvenet criterion has substantial advantages when a manual application is required, like it was needed in the pre-PC age. But, in terms of computer program and of computing time, it is even heavier than T5, and certainly it has no logical advantages compared to the other aforementioned algorithms.

### 8.3 $D_t$ - Fractal dimension of a point-like process

Given a point-like process, let us apply an algorithm which is well known and mentioned by every treatise, also elementary, on fractal analysis. It is called "box counting method" (bcm). By this, the points are computed that are to be plotted on a so-called "Richardson diagram".

In this way, whenever the system has fractal properties, a straight line is obtained, and its slope defines the fractal dimension, which is here called $D_t$ It is

indicated with the subscript $t$ because the computation refers to the variation in time of a point-like process.

Let us now make reference to an arbitrary data series (which constitutes the point-like process) that has been defined in order to satisfy to some prefixed mathematical properties.

Whenever the data series is composed of data that (considering the time instants of their respective measurement) are either *(i)* perfectly equidistant among themselves, or *(ii)* "perfectly" random, it will be found that, by a matter of definition, it is always $D_t = 1$.

This properly is such that, if it is $D_t < 1$, one has to claim that the data series is not perfectly random. Differently stated, this condition is tautological of th same definition of randomness.

In contrast, whenever every record keeps memory, in some way, of the time instants of other records of that given point-like process, we have to find $D_t < 1$, and the smaller is $D_t$ the more organized will be the ensemble of the records, i.e. the larger will be the memory kept by every record about the others.

The maximum organization is attained whenever every record has a "total" memory of all others, that is whenever all elements of the ensemble occur exactly at the identical instant of time (it is like claiming that every event causes - or it is closely correlated with - the occurrence of every other event). In this case, just by a matter of definition, we must always find $D_t = 0$.

Let us consider a really observed point-like process, composed of the "AE events" measured as specified in section 5.4. Compute their $D_t$. The "AE events" will be more organized, when the material, or the AE sources, will be more "aged", or the more 2D distributed in space the AE sources are (see section 4.1), or the more $D_t$ has decreased compared to *1*.

### 8.4 *ARPA* - " Automatic Research of Periodicities and Analysis"

Consider a given a point-like process, which has been constructed as specified in section 7.3 and it is composed of a set of "AE events", everyone characterized by its respective instant of time, while there is no concern about its amplitude on the ordinate axis. Let us plot by it a histogram as follows.

It is well known that, in order to draw a histogram we have to associate with every element a small square on the histogram, of size equal to a suitable and prechosen elementary interval on abscissas, such that all elements are considered identical, which fall inside this abscissa interval.

When we have defined the amplitude of this elementary interval, let us construct a histogram according to the following rationale (which is different compared to the simple standard and well known aforementioned histogram), and let us call *"ARPA"* this new histogram.

Consider the superposition of several "thought experiments" everyone different compared to the others, and such that every "thought experiment" is defined on the basis of the given point-like process.

In every different "thought experiment" let the stopwatch to be started at a different instant of time.

For every pre-chosen element of the point-like process, let us define one new "thought experiment". Every time, let us define a new time origin located just at the instant of time which coincides with the time instant of that specific pre-chosen element of the point-like process.

Construct the histogram "*ARPA*" by keeping in abscissas the time (that, in order to avoid confusion, will be called "$\tau$"), and by superposing all "thought experiments", and by drawing one small elementary square corresponding to every observed elements (upon considering the time origin which is specific for every given aforementioned "thought experiment").

Differently stated, all "thought experiments" are superposed, independent of their respective different origin of time.

Indeed, this algorithm is equivalent to compare (and to sum altogether) the observations carried out by different observers that collect their observations beginning at different times.

If the phenomenon is intrinsically physically repetitive, with a recurrence period $T$, all observers will detect a new "event" after a time $T$ (measured by their respective stopwatch).

"ARPA" results therefore characterized by an accumulation of small squares in correspondence of $\tau = T$, $\tau = 2T$, $\tau = 3T$, ....

Therefore, the histogram *"ARPA"* will thus result to be defined by a sequence of integer values $n(\tau)$ for every $\tau$. According to the classical theory of errors ofn observations, it is well known that the standard error-bar of a histogram of this kind can be significantly represented by claiming that the histogram is a plot of

$$n(\tau) \pm \sqrt{n(\tau)}\,.$$

However, if we plot the histogram "$\sqrt{ARPA}$", instead of "*ARPA*", which is defined formally by the values $\sqrt{n(\tau)}$ for every r, it can be shown in a reasonably rapid way that the standard error-bar is

$$\sqrt{n(\tau)} \pm 1/2 \quad \text{(Pavese and Gregori, 1984).}$$

This property is heuristically very important, because the error-bar is no more a function, of $n(\tau)$, rather it is a constant vs. $\tau$. This makes particularly effective and significant the visual assessment of the peaks of "$\sqrt{ARPA}$", which are a recurrent feature at some suitable $\tau = T$, $\tau = 2T$, $\tau = 3T$, .....

In this way it is possible to assess, in an objective way, an eventual intrinsic periodicity in the starting point-like process. Let us call it $T_0$.

Let us consider the histogram $\sqrt{ARPA}$, defined by the values $\sqrt{n(\tau)} \pm 1/2$ for every given $\tau$.

Let us define a new fictitious $\sqrt{ARPA}$, and call it $\sqrt{ARPA}^{(1)}$, which is identical to the previous one, except that its values that correspond to $\tau = q\,To$ (with q = 1, 2, ...) have been arbitrarily changed into $n(r) = 0$.

Plot $\sqrt{ARPA}^{(1)}$ and by visual inspection let us assess whether another periodicity appears evident or not (analogously to the previous assessment about $T_0$). If this is found, call it $T_1$.

Iteratively, it is thus possible to assess the periodicities which are intrinsic inside the point-like process that has been analyzed.

Call them $T_0$, $T_1$, $T_2$, ...

The procedure is visual, and it will be possible to try to exploit it automatically in order that the software can give automatically the list of the intrinsic periodicities.

The definition is however much delicate of the rationale for such a procedure, and in general it depends on the quality (or on the error bars) that characterize the observational data that are available.

Therefore, in general, it is possible to foresee how to assess an algorithm which automatically givers an indicative list of the periodicities which are intrinsic to the point-like process. But, in general, a suitable final check has always to be carried out by visual inspection.

Indeed, the human eye is the most efficient of "analogue computers" that can be envisaged, and in the final analysis its role can never be substituted.

This is an intrinsic logical limit of the rationale of this whole problem.

A few additional more specific comments are needed in order to explain this aspect.

First of all, let us consider for this purpose a procedure which is customary in the statistical analysis of a data series. The data series will be briefly denoted by $f(t)$.

Whenever a periodicity has been assessed, call it T, suppose to draw ideally, on a transparent film, the time-plot of $f(t)$.

Cut, by a scissor, this film into several contiguous time-segments, every one of duration $T$, and superpose all these segments. Consider the resulting diagram composed of several superposed single time-plots, and compute - for every time instant on abscissas - the mean value and the rms deviation of all superposed lines.

According to the lingo of statisticians (typically applied to biological measurements) this kind of diagram is called "cycle diagram" referred to the pre-chosen periodicity $T$.

A data series - which is arbitrarily constructed by adding one after the other, repeatedly, several times the identical cycle diagram - will therefore be representative of a physical signal which displays a pure periodicity $T$. This physical signal may therefore be subtracted from the original data series. The residual may be analyzed anew, and it will be thus possible to envisage a new periodicity, etc.

Upon considering the case history here of concern, when, as mentioned above, a periodicity $T_0$ has been assessed by means of " $\sqrt{ARPA}$ ", let us try to subtract the "AE events" that appear to be typically involved by the $T_0$ periodicity.

One may hypothesize to perform this job by computing the cycle diagram which corresponds to "ARPA" or " $\sqrt{ARPA}$ ".

But, the cycle diagram either of "ARPA" or of $\sqrt{ARPA}$ is not composed of integer values, i.e. it is not a point-like process. Hence, the aforementioned procedure cannot be directly applied.

An algorithm ought to be empirically envisaged by which the residual series can be transformed into a point-like process, etc. But this appears to be somewhat problematic, and in general, maybe it is not always possible.

The correct procedure is therefore to begin with the original EA data series, and to construct the cycle diagram corresponding to the periodicity $T_0$ that has thus just been found. Then, construct the function of pure periodicity $T_0$ as mentioned above. Then, compute the residual, by subtraction of this function of pure periodicity $T_0$ from the original AE records.

Then, it is possible to apply the entire aforementioned procedure, by searching outliers, etc., until a new periodicity $T_1$ is envisaged, etc. and it is thus possible to proceed iteratively, etc.

Everything is certainly hard-working, and the direct visual procedure is certainly much more rapid.

In any case, consider that the assessment by means of *ARPA* of the intrinsic periodicities of the system is *per se* a final target of the data analysis, and it gives an information of direct interest for the interpretation of the AE records.

Hence, the need for a direct visual interpretation is certainly akin to the needs of the analysis of the available records.

In addition, consider that physical intuition is in any case fundamental in the choice of the procedure that gives a better evidence of possible regularities. Indeed, by means of *ARPA* we are not looking for a mere formal mathematical property, rather we search for an intrinsic physical characteristic of the starting records. In addition, this characteristic is "hidden" by error-bars that in general *per se* are unknown.

Differently stated, physics is often the best advisor about the mathematics that have to be applied, in order to envisage and prove in a rigorous and unquestionable way the intrinsic physical properties of the system.

By applying this procedure, it has been found that the volcano Peteroa is a high precision stopwatch, suited to monitor tidal phenomena of solid Earth.

Similarly, a metal allow will likely display different behaviors and intrinsic typical periodicities (when dealing with identical applied stress and other environmental conditions, etc.) depending on its composition, upon considering the role of its constituents. Similarly, it has to be expected that there are much different behaviors in concrete, depending on several factors.

However, as it often occurs, it is impossible to foresee *a priori* the typology and implications of the observational evidences that may be extracted by an algorithm which is focused on physical aspects, which have never been investigated by any other mean.

## 8.5 Imbò algorithm

Given a point-like process, composed of "events", say that the $j$-th "event" occurs at the $t_j$ time instant.

Compile a table with three columns, which contain, in this order, on every raw, $j$, $t_j$, $\Delta t_j \equiv t_{j+1} - t_j$.

Draw a plot which represents $\Delta t_j$ *vs. j* (note that this is not a function of $t_j$, rather of $j$). This is called "Imbò histogram".

Its physical motivation has been explained in section 5.5 by means of a "calorimetric" argument, upon recalling the mechanism, which characterizes the whistle of the security valve of a pressure cooker.

It was applied for the first time in 1928, on the basis of a great physical feeling and successfully, by the late Prof. Giuseppe Imbò (who was later going to become a "historical" Director of the Vesuvian Observatory). Imbò considered at that time the point-like process identified with the historical eruptions of Etna that had opened a new eruptive boca. The algorithm was later abandoned (following a non-rigorous and unlucky application carried out by other authors on an incorrect data series dealing with the Hawaii volcanoes).

The algorithm was re-evaluated by the author of the present patent proposal. He applied it to the historical data series of all volcanoes of the world (Gregori et al., 1994). The algorithm resulted (mathematically) "robust", and heuristically very effective, and suited to assess the intrinsic cycles of every given volcano (Gregori et al., 1992, 1994; Gregori, 1993, 1994, 1996, 1996a, 1998), and also to prove its dependence on the solar cycle (which controls the process of generation of the endogenous heat; Gregori, 2002, 2004, 2006, 2006a, 2009).

Therefore, there is no doubt that this algorithm has to be considered as a standard procedure suited to characterize the properties of every given point-like process.

However, according to the applications that have been made up to now to data series of "AE events", the Imbò algorithm has not yet evidenced - as a matter of fact - physical aspects of particular interest.

Consider that every different algorithm is suited to give evidence of some intrinsic physical properties which are "hidden" inside a given point-like-process.

In addition, every given algorithm relies on a well defined basic rationale. When this rationale conforms with the properties of the primary physical drivers of the investigated phenomenon, the algorithm will result heuristically very effective.

In contrast, when the physics of the problem reflects a different rationale compared to that given algorithm, its application will give a formal result, which is unquestionable *per se,* although its interpretation is not easy, immediate or evident in terms of its physical content.

According to the general rationale which is the basis of the method of the present invention, it appears likely that the Imbò algorithm can be applied much effectively whenever one wants to monitor the threshold for the trigger of a "flaw domain". Differently stated, its application requires to monitor the AE signal with a time resolution much higher compared to the mean lifespan of a "flay domain".

The concern is therefore at most about the data acquisition of the AE records, with a time resolution much higher compared to what has been made until now. In principle, the Imbò algorithm is certainly reliable, although it can be applied only inside an observational environment suited to its intrinsic rationale.

Therefore the application of the Imbò algorithm to the point-like process composed by the aforementioned "AE events" is a diagnostic tool which is certainly valid in terms of rigor of its basic rationale. However, *a priori* it is difficult to foresee its effective heuristic possibilities as long as no systematic application can be carried out to a wide set of case histories.

**Bibliography**

Banzon, Viva P., Giorgiana de Franceschi, and Giovanni P. Gregori, 1992. The mathematical handling and analysis of non-homogeneous and incomplete multi-variate historical data seriesempio In Frenzel (1992), 137-150;

Banzon, Viva P., Giovanni P. Gregori, Roberto Leonardi, Giorgiana de Franceschi, and Wei-Chyung Wang, 1992a. An analysis of the 510 year data series of the dryness/wetness index for 120 regions of China. In Schröder and Legrand (1992), 223-238;

Banzon, Viva P., Michele Colacino, Giorgiana de Franceschi, Lorenzo Diodato, Giovanni P. Gregori, Marco P. Pavese, and Rosalia Santoleri, 1990. Tiber floods, anomalous climatic events in the upper Po valley, and volcanic activity. In Schröder (1990), 73-79;

Biancolini, M. E., Carlo Brutti, Gabriele Paparo, Alessandro Zanini, 2006. Fatigue cracks nucleation on steel, acoustic emission and fractal analysis. Int. J. Fatigue, 28, (12), 1820-1825.

Braccini, S., C. Casciano, F. Cordero, F. Frasconi, G. P. Gregori, E. Majorana, G. Paparo, R. Passaquieti, P. Puppo, P. Rapagnani, Fulvio Ricci, and R. Valentini, 2002. Monitoring the acoustic emission of the blades of the mirror suspension for a gravitational wave interferometer. Phys. Lett. A, 301, 389-397.

Bradley, Raymond S., and P. D. Jones, (eds), 1992. Climate since A. D. 1500, 679 pp., Routledge, London and New York.

Cello, Giuseppe, and B. D. Malamud, (eds), 2006. Fractal analysis for natural hazards, Geol. Soc. Lond., Spec. Publ., 261, 1-172.

Frenzel, Burkhart, (ed.), 1992. Pal%□oklimaforschung - Palaeoclimate Research, (Spec. issue: ESF Project - European Palaeoclimate and Man 2, Proceedings of the ESF Meeting on Climate in Europe in the last 10000 years, Mainz, Germany, March 1990). Akademie der Wissenschaften und der Literatur, Mainz, European Science Foundation, Strasbourg, and Gustav Fischer Verlag, Stuttgart, Jena, and New York.

Gregori, Giovanni P. 1990. A few mathematical procedures for the analysis of incomplete historical data seriesempio In Schröder (1990), 80-127.

Gregori, Giovanni P., 1984. La conducibilità elettrica nella crosta e nella litosfera. In Meloni and Molina (1984), 205-235.

Gregori, Giovanni P., 1993. The next eruption of Somma-Vesuvius. In Schröder (1993), 191-213.

Gregori, Giovanni P., 1993a. Metodologie per l'interpretazione della strutture del sottosuolo con i campi e.m. naturali. Annali di Geofisica, 36, Suppl. (5/6), 115-145.

Gregori, Giovanni P., 1994. Geomagnetism, volcanoes, global climate change, and predictability. A progress report. Annali di Geofisica, 37, Suppl. (5), 1329-1340.

Gregori, Giovanni P., 1996. The next eruption of Somma-Vesuvius. In Piccione and Antonelli (1996), 399-468.

Gregori, Giovanni P., 1996a. Satellite, volcanoes, and global change. Earth Space Review, 5, (1), 17-26.

Gregori, Giovanni P., 1997. Historical data and global change. Case studiesempio In Schröder (1997a), 183-210.

Gregori, Giovanni P., 1998. Natural catastrophes and point-like processesempio Data handling and prevision. Annali di Geofisica, 41, (5/6), 767-786.

Gregori, Giovanni P., 2002. Galaxy - Sun - Earth relations. The origin of the magnetic field and of the endogenous energy of the Earth, with implications for volcanism, geodynamics and climate control, and related items of concern for stars, planets, satellites, and other planetary objects. A discussion in a prologue and two parts. Beiträge zur Geschichte der Geophysik und Kosmischen Physik, Band 3, Heft 3, 471 pp. 33

Gregori, Giovanni P., 2004. The geodynamo and Galaxy - Sun - Earth relations. Implications for geodynamics, climate, and for the origin of the magnetic field of planets, satellites, and larger celestial bodiesempio In Schröder (2004), 161-165.

Gregori, Giovanni P., 2006. Galaxy-Sun-Earth Relations: the origin of the magnetic field and of the endogenous energy of the Earth, with implications for volcanism, geodynamics and climate control and related items of concern for stars, planets, satellites, and other planetary objects, Newslett. New Concepts Global Tecc., (38), 34-36.

Gregori, Giovanni P., 2006a. The Earth's interior - Myth and science. In Schröder (2006b), 108-126.

Gregori, Giovanni P., 2009. The Earth's interior - Myth and science, New Concepts Global Tecc. Newslett., (53), 57-75. [Revised edition of Gregori (2006a)]

Gregori, Giovanni P., and Gabriele Paparo 2006. The Stromboli crisis of 28~30 December 2002. Acta Geod. Geophys. Hung., 41, (2), 273-287.

Gregori, Giovanni P., and Gabriele Paparo, 2004. Acoustic emission (AE). A diagnostic tool for environmental sciences and for non destructive tests (with a potential application to gravitational antennas). In Schröder (2004), 166-204.

Gregori, Giovanni P., Gabriele Paparo, Ugo Coppa, and Iginio Marson, 2002. Acoustic emission in geophysics: a reminder about the methods of analysis. Boll. Geofis. Teor. Appl., 43, (1/2), 157-172.

Gregori, Giovanni P., Matteo Lupieri, Gabriele Paparo, Maurizio Poscolieri, Giuliano Ventrice, and Alessandro Zanini, 2007. Ultrasound monitoring of applied forcing, material ageing, and catastrophic yield of crustal structuresempio Nat. Hazards Earth Syst. Sci., 7, 723-731.

Gregori, Giovanni P., Maurizio Poscolieri, Gabriele Paparo, Sara De Simone, Claudio Rafanelli, and Giuliano Ventrice, 2010. "Storms of crustal stress" and AE earthquake precursors, Nat. Hazards Earth Syst. Sci., 10, 319-337.

Gregori, Giovanni P., Viva Banzon, and Roberto Leonardi, 1994. The cycles of volcanoes, and the global synchronism of the time variation of their heat source. In Schröder and Colacino (1994), 152-191.

Gregori, Giovanni P., Viva P. Banzon, Michele Colacino, Giorgiana de Franceschi, Lorenzo Diodato, Marco P. Pavese, and Rosalia Santoleri, 1994a. Floods, climatic anomalies, and explosive vulcanism: a four-decade cycle? In Schröder and Colacino (1994), 109-133.

Gregori, Giovanni P., Viva P. Banzon, Roberto Leonardi, and Giorgiana de Franceschi, 1992. Geomagnetic activity vs. volcanic cycles, and their forecasting. Application to Etna and Vesuvius. In Schröder and Legrand (1992), 188-222.

Imbò, Giuseppe, 1928. Variazioni cicliche nella successione dei periodi di riposo etnei. Bull. Volcanologique, (15/18), 80-88.

Lagios, Evangelos, Vassilis A. Sakkas, Issaak Parcharidis, Maurizio Poscolieri, Giovanni P. Gregori, Gabriele Paparo, and Iginio Marson, 2004. Ground Deformation Deduced by DGPS, DInSAR, AE, and DEM analysis in Cephallonia Island. In the Proc. the SCI 2004 meeting, Orlando, Florida, July 2004 [6pp.].

Meloni, Antonio, and Franco Molina (eds), 1984. Atti del 10 Convegno di geomagnetismo, 284 pp., Istituto Nazionale di Geofisica, Roma, 23-24 Ottobre 1984.

Paparo, Gabriele, and Giovanni P. Gregori, 2003. Multifrequency acoustic emissions (AE) for monitoring the time evolution of microprocesses within solids. Reviews of Quantitative Nondestructive Evaluation, 22, (AIP Conference Proceedings ed. by D. O. Thompson and D. E. Chimenti), 1423-1430.

Paparo, Gabriele, Giovanni P. Gregori, Alberto Taloni, and Ugo Coppa, 2004. Acoustic emissions (AE) and the energy supply to Vesuvius - 'Inflation' and 'deflation' timesempio Acta Geod. Geophys. Hung., 40, (4), 471-480.

Paparo, Gabriele, Giovanni P. Gregori, Francesco Angelucci, Alberto Taloni, Ugo Coppa, and Salvo Inguaggiato, 2004a. Acoustic emissions in volcanoes: the case histories of Vesuvius and Stromboli. In the Proc. the SCI 2004 meeting, Orlando, Florida, July 2004.

Paparo, Gabriele, Giovanni P. Gregori, Maurizio Poscolieri, Iginio Marson, Francesco Angelucci, and Giorgia Glorioso, 2006. Crustal stress crises and seismic activity in the Italian peninsula investigated by fractal analysis of acoustic emission (AE), soil exhalation and seismic data. In Cello and Malamud (2006), 47-61.

Pavese, Marco P., and Giovanni P. Gregori, 1984. An analysis of six centuries (XII through XVII A.D.) of climatic records from the upper Po valley. In Schröder (1994), 185-220.

Pavese, Marco P., Viva P. Banzon, Michele Colacino, Giovanni P. Gregori, and Michele Pasqua, 1992. Three historical data series on floods and anomalous climatic events in Italy. In Bradley and Jones (1992), 155-170.

Piccione, Vincenzo, and Cristina Antonelli (eds), 1996. Proceedings of the 4th Workshop of Progetto Strategico Clima, Ambiente e Territorio nel Mezzogiorno, Lecce, November 11-14, 1991, 2 vol. 644 pp., CNR, Roma.

Poscolieri, Maurizio, Evangelos Lagios, Giovanni P. Gregori, Gabriele Paparo, Vassilis A. Sakkas, Issaak Parcharidis, Iginio Marson, Konstantinos Soukis, Emmanuel Vassilakis, Francesco Angelucci, Spyridoula Vassilopoulou, 2006. Crustal stress and seismic activity in the Ionian archipelago as inferred by combined satellite and ground based observations on the Kefallinla Island (Greece). In Cello and Malamud (2006), 63-78.

Poscolieri, Maurizio, Giovanni P.Gregori, Gabriele Paparo, and Alessandro Zanini, 2006a. Crustal deformation and AE monitoring: annual variation and stress-soliton propagation, Nat. Hazards Earth Syst. Sci., 6, 961-971.

Ruzzante, Josè, and Maria Isabel Lòpez Pumarega, (eds), 2008. Acoustic emission, Vol. 1, Microseismic, learning how to listen to the Earth. . . , 68 pp., CNEA, Buenos Airesempio ISBN 978-987-05-4116-5.

Ruzzante, Josè, Maria Isabel Lòpez Pumarega, Giovanni P. Gregori, Gabriele Paparo, Rosa Piotrkowski, Maurizio Poscolieri, and Alessandro Zanini, 2008. Acoustic emission (AE), tides and degassing on the Peteroa volcano (Argentina). In Ruzzante and Lòpez Pumarega (2008), 37-68.

Schroder, Wilfried, (ed.), 1984. Historical events and people in geosciences, Selected papers from the symposia of the Interdivisional Commission on History of IAGA during the IUGG General Assembly, held in Hamburg, 1983, 220 pp., Verlag Peter Lang, Jupiterstrasse 15, CH-3015 Bern.

Schröder, Wilfried, (ed.), 1990. Advances in geosciencesempio 358 pp., Interdivisional Commission on History of IAGA, Bremen - Roennebeck.

Schroder, Wilfried, (ed.), 1997a. Physics and geophysics with special historical case studies (A Festschrift in honour of Karl-Heinrich Wiederkehr). Mitteilungen des Arbeitskreises Geschichte der Geophysik der DDG, 16, Jahrgang (1997), (2/5), and Newsletter of IDCH-IAGA, (25), 1-409, Science Edition / IDCH-IAGA / AKGGKP, Science Edition, Bremen Roennebeck and Potsdam.

Schröder, Wilfried, (ed.), 2004. Meteorological and geophysical fluid dynamics (A book to commemorate the centenary of the birth of Hans Ertel), 417 pp., Arbeitkreis Geschichte der Geophysik und Kosmische Physik, Wilfried Schröder/Science, Bremen.

Schröder, Wilfried, (ed.), 2006b. Case studies in physics and geophysics. Beitrage zur Geschichte der Geophysik und Kosmischen Physik, spezial issue (2006/2), 126 pp. (Journal for the history of Geophysics and Cosmical Physics), Science Editions, AKGG, Bremen-Roennebeck.

Schröder, Wilfried, and J. P. Legrand, (eds), 1992. Solar terrestrial variability and global change. 243 pp., IDCH of IAGA, Bremen-Roennebeck.

Schroder, Wilfried, and Michele Colacino, (eds), 1994. Geophysics: past achievements and future challengesempio Newsletter of IDCH-IAGA, (20), 1-191, Science Edition / IDCH of IAGA, Bremen-Roennebeck.

**Claims**

1. Method for the quantitative dynamic characterization of the ageing of a material, to which at least an acoustic transducer is applied, which is dedicated to a corresponding pre-defined acoustic oscillation frequency $\nu$ to provide an acoustic emission signal AE emitted by the material in a pre-defined time interval, the AE signal provided by each transducer being composed by a discrete series of rms values $f(t_j)$ of electrical potential values as measured at subsequent time points $t_j$ with $j = 0,1,2,...$, which are spaced apart by a time interval $\Delta_0 t$ that is predetermined as a function of the material and the wished speed of analysis of the same material,

   the method being **characterised in that** it comprises the execution of the following analysis steps of the AE signals:

   A. for each frequency $\nu$, finding the outliers of said AE signal, each outliers indicating a tail in the statistical distribution of the values $f(t_j)$ and therefore indicating a process of elementary material collapsing or "leak domain", the time sequence of the outliers thus denoting the time evolution of the leak domains associated to frequency $\nu$ and hence the state change occurring in the material;

   B. starting from said discrete series of values $f(t_j)$, removing from them the outliers as found in step A, and constructing the "hammer diagram";

   C. on the basis of the hammer diagram in step B, calculating the function of the "hammer index" $H(t_h)$ at time instants $t_h$=1,2,3,..., which can only assume either value +1, representing an average anti-clockwise curvature in the trajectory described by the hammer diagram and therefore a response of the material to an external stress, or value -1 representing an average clockwise curvature in the trajectory described by the hammer diagram and therefore a current re-equilibration process of the material subsequent to the external stress, said "hammer index" being representative of the statistics of the times of evolution of the leak domains;

   D. for each triplet of points $f(t_{k-1})$, $f(t_k)$ and $t(t_{k+1})$, calculating the radius $R_H = \overline{P_t O}$ of the circumference passing through the same $f(t_{k-1})$, $f(t_k)$ and $f(t_{k+1})$, $R_H$ being thus the point curvature radius of the trajectory described by the hammer diagram, that is directly correlated with the average amplitude of the log-normal-type distribution that is characteristic of a leak domain associated to frequency $\nu$ of the considered AE signal.

2. Method according to claim 1, **characterised in that**, subsequently to step A, one determines the periodical components contained in the sequence of values $f(t_j)$, preferably by the *ARPA* algorithm, monitoring in real-time the time sequence of the decay processes of the material, which is related to its micro - composition and structure.

**3.** Method according to claim 1 or 2, **characterised in that**, after step A, starting from the discrete series of values $f(t_j)$, one transforms the same series $f(t_j)$ in a point-like process, to perform the subsequent calculation of the fractal dimension, with respect to time, *Dt,* which is an indicator of the ageing undergone by the material.

**4.** Method according to any claim 1 to 3, **characterised in that**, the AE signals are induced by provoking in the material an hysteresis cycle by electromagnetic induction.

**5.** Method according to any claim 1 to 4, **characterised in that**, after step A, when $\Delta_0 t << \tau_{fen}$, $\tau_{fen}$ being the time constant typical for the performance evolution of the material, one executes the Imbò algorithm for the calculation of the saturation and trigger of the catastrophical collapse of the material, that is, by this a test is carried out on whether different stressing factors or joint causes are summing up progressively, till the determination a possible structural collapse of the material.

**6.** Method according to any claim 1 to 5, **characterized in that** a further step E is executed, wherein the orientation $\phi(t)$ of the tangent to said circumference of step D is computed at the point $f(t_k)$.

**7.** Computer program **characterised in that** it comprises code means set up to execute, when running on a computer, the method according to any one of claims 1 to 6.

**8.** Memory medium, readable by a computer, storing a program, **characterised in that** the program is the computer program according to claim 7.

**9.** Apparatus for the quantitative dynamic characterization of the ageing of a material using AE signals, **characterized in that** it comprises:

     - a AE signals acquisition and pre-processing system, comprising one or more acoustic transducers that are applied to the material and dedicated each to a corresponding pre-defined acoustic oscillation frequency $v$ to provide an acoustic emission AE signal, the acquisition and pre-processing system performing the steps to obtain the values $f(t_j)$ according to any of the claims 1 to 6;

     - a data analysis electronic unit, set up to perform steps A to D of the method according to the method of any claim 1 to 6,

wherein the program according to claim 7 is installed on said data analysis electronic unit.

## Patentansprüche

**1.** Verfahren zur dynamischen quantitativen Charakterisierung der Alterung eines Materials, an dem zumindest ein akustischer Wandler angelegt ist, der auf eine entsprechende vordefinierte akustische Schwingungsfrequenz $v$ eingestellt ist, um ein akustisches Emissionssignal AE bereitzustellen, das von dem Material in einem vordefinierten Zeitintervall emittiert wird, wobei das von jedem Wandler bereitgestellte AE-Signal aus einer diskreten Reihe von Effektivwerten $f(t_j)$ von elektrischen Potenzialwerten zusammengesetzt ist, die an aufeinanderfolgenden Zeitpunkten $t_j$ mit $j=0,1,2,...$, gemessen werden, die durch ein Zeitintervall $\Delta_0 t$ voneinander beabstandet sind, das als eine Funktion des Materials und der gewünschten Analysegeschwindigkeit des gleichen Materials vorbestimmt ist,
**dadurch gekennzeichnet, dass** das Verfahren die Durchführung der folgenden Analyseschritte des AE-Signals umfasst:

     A. für jede Frequenz $v$, Finden der Ausreißer des AE-Signals, wobei jeder Ausreißer einen Randbereich in der statistischen Verteilung der Werte $f(t_j)$ anzeigt, und folglich einen Vorgang des Zusammenfallens des Grundmaterials oder der Leckbereiche (engl. "*leak domain*") anzeigt, so dass die zeitliche Abfolge der Ausreißer die zeitliche Entwicklung der Leckbereiche, die mit der Frequenz $v$ assoziiert sind, angeben, und somit die Zustandsänderung in dem Material;
     B. ausgehend von der diskreten Reihe der Werte $f(t_j)$, Entfernen der in Schritt A gefundenen Ausreißer von diesen und Erzeugen des "Hammer-Diagramms";
     C. basierend auf dem Hammer-Diagramm des Schritts B, Berechnen der Funktion des "Hammer-Indexes" $H(t_h)$ zu Zeitpunkten $t_h=1,2,3,...$, die entweder nur den Wert +1, der eine durchschnittliche Krümmung gegen den Uhrzeigersinn in der durch das Hammer-Diagramm beschriebenen Trajektorie darstellt, und folglich eine Antwort des Materials auf eine externe Beanspruchung darstellt, oder den Wert -1, der eine durchschnittliche Krümmung im Uhrzeigersinn in der durch das Hammer-Diagramm beschriebenen Trajektorie darstellt, und folglich einen momentanen Vorgang des Wieder-ins-Gleichgewicht-Bringen des Materials infolge der externen Beanspruchung darstellt, annehmen können, wobei der "Hammer-Index" repräsentativ für die Statistik der Zeiten der Entwicklung der Leckbereiche ist;

D. für jedes Punkte-Triplet $f(t_{k-1})$, $f(t_k)$ und $f(t_{k+1})$, Berechnen des Radius $R_H = \overline{P_t O}$ des Umfangs, der durch die gleichen $f(t_{k-1})$, $f(t_k)$ und $f(t_{k+1})$ Verläuft, wobei $R_H$ folglich der Punktkrümmungsradius der durch das Hammer-Diagramm beschriebenen Trajektorie ist, der mit der Durchschnittsamplitude der Log-Normalverteilung, die charakteristisch für einen mit der Frequenz $\nu$ des betrachteten AE-Signals assoziierten Leckbereich ist, direkt korreliert ist.

2. Verfahren nach Anspruch 1, **dadurch gekennzeichnet, dass**, nachfolgend zu Schritt A, die periodischen Bestandteile, die in der Abfolge der Werte $f(t_j)$ enthalten sind, bestimmt werden, vorzugsweise durch den ARPA-Algorithmus, wodurch in Echtzeit die Zeitsequenz des Zerfallprozesses des Materials, der im Zusammenhang zu dessen Mikro-Zusammensetzung und Struktur steht, überwacht wird.

3. Verfahren nach Anspruch 1 oder 2, **dadurch gekennzeichnet, dass** nach Schritt A, ausgehend von der diskreten Reihe von Werten $f(t_j)$, die gleiche Reihe $f(t_j)$ in einen punktähnlichen Vorgang transformiert wird, um die nachfolgende Berechnung der fraktalen Dimension in Bezug auf die Zeit, $D_t$, die ein Indikator für die Alterung, der das Material ausgesetzt war, ist, durchzuführen.

4. Verfahren nach einem der Ansprüche 1 bis 3, **dadurch gekennzeichnet, dass** die AE-Signale induziert werden, indem in dem Material ein Hysteresezyklus durch elektromagnetische Induktion ausgelöst wird.

5. Verfahren nach einem der Ansprüche 1 bis 4, **dadurch gekennzeichnet, dass**, nach Schritt A, wenn $\Delta_0 t \ll \tau_{fen}$, wobei $\tau_{fen}$ die Zeitkonstante ist, die typisch für die Leistungsentwicklung des Materials ist, der Imbò-Algorithmus für die Berechnung der Sättigung und des Auslösers des katastrophalen Zusammenbrechens des Materials berechnet wird, das heißt, hierbei wird ein Test durchgeführt, ob unterschiedliche Belastungsfaktoren oder gemeinsame Ursachen sich zunehmend aufaddieren, bis zur Bestimmung eines möglichen strukturellen Zusammenbrechens des Materials.

6. Verfahren nach einem der Ansprüche 1 bis 5, **dadurch gekennzeichnet, dass** ein weiterer Schritt E durchgeführt wird, bei dem die Orientierung $\phi(t)$ der Tangente des Umfangs in Schritt D an dem Punkt $f(t_k)$ berechnet wird.

7. Computerprogramm, **dadurch gekennzeichnet, dass** es Codemittel umfasst, die, wenn sie auf einem Computer laufen, ausgeführt sind, das Verfahren nach einem der Ansprüche 1 bis 6 auszuführen.

8. Ein computerlesbares Speichermedium, das ein Programm speichert, **dadurch gekennzeichnet, dass** das Programm das Computerprogramm nach Anspruch 7 ist.

9. Vorrichtung für die quantitative dynamische Charakterisierung der Alterung eines Materials unter Verwendung von AE-Signalen, **dadurch gekennzeichnet, dass** die Vorrichtung umfasst:

- ein Erfassungs- und Vorverarbeitungssystem für AE-Signale, umfassend einen oder mehrere akustische Wandler, die am Material angelegt werden, und von denen jeder auf eine entsprechende vordefinierte akustische Schwingungsfrequenz $\nu$ eingestellt ist, um ein akustisches Emissions-AE-Signal bereitzustellen, wobei das Erfassungs- und Vorverarbeitungssystem die Schritte durchführt, um die Werte $f(t_j)$ gemäß einem der Ansprüche 1 bis 6 zu erhalten;
- eine elektronische Einheit zur Datenanalyse, die eingerichtet ist, die Schritte A bis D des Verfahrens gemäß dem Verfahren eines der Ansprüche 1 bis 6 durchzuführen,

wobei das Programm gemäß Anspruch 7 auf der elektronischen Einheit zur Datenanalyse installiert ist.

**Revendications**

1. Procédé pour la caractérisation dynamique quantitative du vieillissement d'un matériau, sur lequel est appliqué au moins un transducteur acoustique, qui est dédié à une fréquence d'oscillation acoustique prédéfinie correspondante $\nu$ pour fournir un signal d'émission acoustique AE émis par le matériau dans un intervalle de temps prédéfini, le signal AE fourni par chaque transducteur étant composé d'une série discrète de valeurs rms $f(t_j)$ de valeurs de potentiel électrique mesurées à des points dans le temps successifs $t_j$, avec $j = 0, 1, 2,...$, espacés d'un intervalle de temps $\Delta_0 t$ qui est prédéterminé en fonction du matériau et de la vitesse d'analyse souhaitée pour ce matériau, le procédé étant **caractérisé en ce qu'**il comprend l'exécution des étapes suivantes d'analyse des signaux AE :

A. pour chaque fréquence $\nu$, trouver les points aberrants dudit signal AE, chaque point aberrant indiquant une queue dans la distribution statis-

tique des valeurs $f(t_j)$ et indiquant donc un processus d'effondrement élémentaire du matériau ou "domaine de fuite", la séquence temporelle des points aberrants dénotant donc l'évolution dans le temps des domaines de fuite associés à la fréquence $\nu$ et donc le changement d'état survenant dans le matériau ;

B. en partant de ladite série discrète de valeurs $f(t_j)$, retirer de celle-ci les points aberrants déterminés à l'étape A et construire le "diagramme de l'effet marteau" ;

C. à partir du diagramme de l'effet marteau de l'étape B, calculer la fonction de "l'indice d'effet marteau" $H(t_h)$ aux instants $t_h = 1, 2, 3, ...$, qui ne peut prendre que la valeur +1, représentant une courbe moyenne dans le sens inverse des aiguilles d'une montre de la trajectoire décrite par le diagramme de l'effet marteau, et donc une réponse du matériau à une sollicitation externe, ou la valeur -1, représentant une courbe moyenne dans le sens des aiguilles d'une montre de la trajectoire décrite par le diagramme de l'effet marteau et donc un processus de rééquilibrage en court du matériau à la suite de la sollicitation externe, ledit "indice d'effet marteau" étant représentatif de la statistique des temps d'évolution des domaines de fuite ;

D. pour chaque triplet de points $f(t_{k-1})$, $f(t_k)$ et $f(t_{k+1})$, calculer le rayon $R_H = \overline{P_tO}$ de la circonférence passant par ces points $f(t_{k-1})$, $f(t_k)$ et $f(t_{k+1})$, $R_H$ étant ainsi le rayon de courbure ponctuelle de la trajectoire décrite par le diagramme de l'effet marteau, qui est directement corrélé à l'amplitude moyenne de la distribution de type log-normal qui est caractéristique d'un domaine de fuite associé à la fréquence $\nu$ du signal AE considéré.

2. Procédé selon la revendication 1, **caractérisé en ce que**, après l'étape A, on détermine les composantes périodiques contenues dans la séquence de valeurs $f(t_j)$, de préférence par l'algorithme *ARPA*, surveillant en temps réel la séquence temporelle des processus de décomposition du matériau, qui est liée à la microcomposition et structure de celui-ci.

3. Procédé selon la revendication 1 ou 2, **caractérisé en ce que**, après l'étape A, en partant de la série discrète de valeurs $f(t_j)$, on transforme cette série $f(t_j)$ en un processus punctiforme, pour exécuter le calcul ultérieur de la dimension fractale, par rapport au temps, $D_t$, qui est un indicateur du vieillissement subi par le matériau.

4. Procédé selon l'une quelconque des revendications 1 à 3, **caractérisé en ce que** les signaux AE sont induits par le fait de provoquer dans le matériau un cycle d'hystérésis par induction électromagnétique.

5. Procédé selon l'une quelconque des revendications 1 à 4, **caractérisé en ce que**, après l'étape A, lorsque $\Delta_0 t \ll \tau_{fen}$, $\tau_{fen}$ étant la constante de temps typique pour l'évolution des performances du matériau, on exécute l'algorithme Imbô pour le calcul de la saturation et le déclenchement de l'effondrement catastrophique du matériau, c'est-à-dire que, par celui-ci, un test est effectué, permettant de déterminer si différents facteurs de contraintes ou causes communes s'ajoutent progressivement, jusqu'à la détermination d'un possible effondrement structurel du matériau.

6. Procédé selon l'une quelconque des revendications 1 à 5, **caractérisé en ce qu'**une étape E supplémentaire est exécutée, dans laquelle l'orientation $\phi(t)$ de la tangente à ladite circonférence de l'étape D est calculée au point $f(t_k)$.

7. Programme d'ordinateur **caractérisé en ce qu'**il comprend des moyens de code conçus pour mettre en oeuvre, lorsqu'ils sont exécutés sur un ordinateur, le procédé selon l'une quelconque des revendications 1 à 6.

8. Moyen de mémoire, lisible par un ordinateur, stockant un programme, **caractérisé en ce que** le programme est le programme d'ordinateur selon la revendication 7.

9. Appareil pour la caractérisation dynamique quantitative du vieillissement d'un matériau au moyen de signaux AE, **caractérisé en ce qu'**il comprend :

- un système d'acquisition et de prétraitement de signaux AE, comprenant un ou plusieurs transducteurs acoustiques qui sont appliqués sur le matériau et qui sont chacun dédiés à une fréquence d'oscillation acoustique prédéfinie correspondante $\nu$ pour fournir un signal d'émission acoustique AE, le système d'acquisition et de prétraitement exécutant les étapes permettant d'obtenir les valeurs $f(t_j)$ selon l'une quelconque des revendications 1 à 6 ;
- une unité électronique d'analyse de données, conçue pour exécuter les étapes A à D du procédé selon l'une quelconque des revendications 1 à 6,

dans lequel le programme selon la revendication 7 est installé sur ladite unité électronique d'analyse de données.

Fig. 1

**_Fig. 2_**

**_Fig. 3_**

35

**Fig. 4**

**Fig. 5**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **BANZON, VIVA P. ; GIORGIANA DE FRANCESCHI ; GIOVANNI P. GREGORI.** The mathematical handling and analysis of non-homogeneous and incomplete multi-variate historical data riesempio. *Frenzel,* 1992, 137-150
- **BANZON, VIVA P ; GIOVANNI P. GREGORI ; ROBERTO LEONARD ; GIORGIANA DE FRANCESCHI ; WEI-CHYUNG WANG.** An analysis of the 510 year data series of the dryness/wetness index for 120 regions of China. *Schröder and Legrand,* 1992, 223-238
- **BANZON, VIVA P. ; MICHELE COLACINO ; GIORGIANA DE FRANCESCHI ; LORENZO DIODATO ; GIOVANNI P. GREGORI ; MARCO P. PAVESE ; ROSALIA SANTOLERI.** Tiber floods, anomalous climatic events in the upper Po valley, and volcanic activity. *Schröder,* 1990, 73-79
- **BIANCOLINI, M. E. ; CARLO BRUTTI ; GABRIELE PAPARO ; ALESSANDRO ZANINI.** Fatigue cracks nucleation on steel, acoustic emission and fractal analysis. *Int. J. Fatigue,* 2006, vol. 28 (12), 1820-1825
- **BRACCINI, S. ; C. CASCIANO ; F. CORDERO ; F. FRASCONI ; G. P. GREGORI ; E. MAJORANA ; G. PAPARO ; R. PASSAQUIETI ; P. PUPPO ; P. RAPAGNANI.** Monitoring the acoustic emission of the blades of the mirror suspension for a gravitational wave interferometer. *Phys. Lett. A,* 2002, vol. 301, 389-397
- Climate since A. D. 1500. Routledge, 1992, 679
- Fractal analysis for natural hazards. Geol. Soc. Lond., Spec. Publ, 2006, vol. 261, 1-172
- Pal%□oklimaforschung - Palaeoclimate Research, (Spec. issue: ESF Project - European Palaeoclimate and Man 2. Proceedings of the ESF Meeting on Climate. March 1990
- Akademie der Wissenschaften und der Literatur, Mainz, European Science Foundation, Strasbourg. Gustav Fischer Verlag
- **GREGORI, GIOVANNI P.** A few mathematical procedures for the analysis of incomplete historical data seriesempio. *Schröder,* 1990, 80-127
- **GREGORI, GIOVANNI P.** La conducibilità elettrica nella crosta e nella litosfera. *Meloni and Molina,* 1984, 205-235
- **GREGORI, GIOVANNI P.** The next eruption of Somma-Vesuvius. *Schröder,* 1993, 191-213
- Metodologie per l'interpretazione della strutture del sottosuolo con i campi e.m. naturali. **GREGORI, GIOVANNI P.** Annali di Geofisica. 1993, vol. 36, 115-145
- Geomagnetism, volcanoes, global climate change, and predictability. A progress report. **GREGORI, GIOVANNI P.** Annali di Geofisica. 1994, vol. 37, 1329-1340
- **GREGORI, GIOVANNI P.** The next eruption of Somma-Vesuvius. *Piccione and Antonelli,* 1996, 399-468
- **GREGORI, GIOVANNI P.** Satellite, volcanoes, and global change. *Earth Space Review,* 1996, vol. 5 (1), 17-26
- **GREGORI, GIOVANNI P.** Historical data and global change. Case studiesempio. *Schröder,* 1997, 183-210
- Natural catastrophes and point-like processesempio Data handling and prevision. **GREGORI, GIOVANNI P.** Annali di Geofisica. 1998, vol. 41, 767-786
- **GREGORI, GIOVANNI P.** Galaxy - Sun - Earth relations. The origin of the magnetic field and of the endogenous energy of the Earth, with implications for volcanism, geodynamics and climate control, and related items of concern for stars, planets, satellites, and other planetary objects. *Beiträge zur Geschichte der Geophysik und Kosmischen Physik,* 2002, vol. 3 (471), 33
- **GREGORI, GIOVANNI P.** The geodynamo and Galaxy - Sun - Earth relations. Implications for geodynamics, climate, and for the origin of the magnetic field of planets, satellites, and larger celestial bodiesempio. *Schröder,* 2004, 161-165
- **GREGORI, GIOVANNI P.** Galaxy-Sun-Earth Relations: the origin of the magnetic field and of the endogenous energy of the Earth, with implications for volcanism, geodynamics and climate control and related items of concern for stars, planets, satellites, and other planetary objects, Newslett. *New Concepts Global Tecc.,* 2006, 34-36
- **GREGORI, GIOVANNI P.** The Earth's interior - Myth and science. *Schröder,* 2006, 108-126
- **GREGORI, GIOVANNI P.** The Earth's interior - Myth and science. New Concepts Global Tecc, 2009, 57-75
- **GREGORI, GIOVANNI P. ; GABRIELE PAPARO.** *Acta Geod. Geophys. Hung.,* 28 December 2002, vol. 41 (2), 273-287

- **GREGORI, GIOVANNI P. ; GABRIELE PAPARO.** Acoustic emission (AE). A diagnostic tool for environmental sciences and for non destructive tests (with a potential application to gravitational antennas). *Schröder,* 2004, 166-204
- **GREGORI, GIOVANNI P. ; GABRIELE PAPARO ; UGO COPPA ; IGINIO MARSON.** Acoustic emission in geophysics: a reminder about the methods of analysis. *Boll. Geofis. Teor. Appl.,* 2002, vol. 43, 157-172
- **GREGORI, GIOVANNI P. ; MATTEO LUPIERI ; GABRIELE PAPARO ; MAURIZIO POSCOLIERI ; GIULIANO VENTRICE ; ALESSANDRO ZANINI.** Ultrasound monitoring of applied forcing, material ageing, and catastrophic yield of crustal structuresempio. *Nat. Hazards Earth Syst. Sci.,* 2007, vol. 7, 723-731
- **GREGORI, GIOVANNI P. ; MAURIZIO POSCOLIERI ; GABRIELE PAPARO ; SARA DE SIMONE ; CLAUDIO RAFANELLI ; GIULIANO VENTRICE.** Storms of crustal stress'' and AE earthquake precursors. *Nat. Hazards Earth Syst. Sci.,* 2010, vol. 10, 319-337
- **GREGORI, GIOVANNI P. ; VIVA BANZON ; ROBERTO LEONARDI.** The cycles of volcanoes, and the global synchronism of the time variation of their heat source. *Schröder and Colacino,* 1994, 152-191
- **GREGORI, GIOVANNI P. ; VIVA P. BANZON ; MICHELE COLACINO ; GIORGIANA DE FRANCESCHI ; LORENZO DIODATO ; MARCO P. PAVESE ; ROSALIA SANTOLERI.** Floods, climatic anomalies, and explosive vulcanism: a four-decade cycle?. *Schröder and Colacino,* 1994, 109-133
- **GREGORI, GIOVANNI P. ; VIVA P. BANZON ; ROBERTO LEONARDI ; GIORGIANA DE FRANCESCHI.** Geomagnetic activity vs. volcanic cycles, and their forecasting. Application to Etna and Vesuvius. *Schröder and Legrand,* 1992, 188-222
- **IMBÒ, GIUSEPPE.** Variazioni cicliche nella successione dei periodi di riposo etnei. *Bull. Volcanologique,* 1928, 80-88
- **LAGIOS, EVANGELOS ; VASSILIS A. SAKKAS ; ISSAAK PARCHARIDIS ; MAURIZIO POSCOLIERI ; GIOVANNI P. GREGORI ; GABRIELE PAPARO ; IGINIO MARSON.** Ground Deformation Deduced by DGPS, DInSAR, AE, and DEM analysis in Cephallonia Island. *Proc. the SCI 2004 meeting, Orlando, Florida,* July 2004, 6
- Atti del 10 Convegno di geomagnetismo. Istituto Nazionale di Geofisica, 23 October 1984, 284
- Multifrequency acoustic emissions (AE) for monitoring the time evolution of microprocesses within solids. Reviews of Quantitative Nondestructive Evaluation, 22. **PAPARO, GABRIELE ; GIOVANNI P. GREGORI.** AIP Conference Proceedings. 2003, 1423-1430
- **PAPARO, GABRIELE ; GIOVANNI P. GREGORI ; ALBERTO TALONI ; UGO COPPA.** Acoustic emissions (AE) and the energy supply to Vesuvius - 'Inflation' and 'deflation' timesempio. *Acta Geod. Geophys. Hung.,* 2004, vol. 40 (4), 471-480
- **PAPARO, GABRIELE ; GIOVANNI P. GREGORI ; FRANCESCO ANGELUCCI ; ALBERTO TALONI ; UGO COPPA ; SALVO INGUAGGIATO.** Acoustic emissions in volcanoes: the case histories of Vesuvius and Stromboli. *Proc. the SCI 2004 meeting, Orlando, Florida,* July 2004
- **PAPARO, GABRIELE ; GIOVANNI P. GREGORI ; MAURIZIO POSCOLIERI ; IGINIO MARSON ; FRANCESCO ANGELUCCI ; GIORGIA GLORIOSO.** Crustal stress crises and seismic activity in the Italian peninsula investigated by fractal analysis of acoustic emission (AE), soil exhalation and seismic data. *Cello and Malamud,* 2006, 47-61
- **PAVESE, MARCO P. ; GIOVANNI P. GREGORI.** An analysis of six centuries (XII through XVII A.D.) of climatic records from the upper Po valley. *Schröder,* 1984, 185-220
- **PAVESE, MARCO P. ; VIVA P. BANZON ; MICHELE COLACINO ; GIOVANNI P. GREGORI ; MICHELE PASQUA.** Three historical data series on floods and anomalous climatic events in Italy. Bradley and Jones, 1992, 155-170
- Proceedings of the 4th Workshop of Progetto Strategico Clima, Ambiente e Territorio nel Mezzogiorno, Lecce. 11 November 1991, vol. 644
- **POSCOLIERI, MAURIZIO ; EVANGELOS LAGIOS ; GIOVANNI P. GREGORI ; GABRIELE PAPARO ; VASSILIS A. SAKKAS ; ISSAAK PARCHARIDIS ; IGINIO MARSON ; KONSTANTINOS SOUKIS ; EMMANUEL VASSILAKIS ; FRANCESCO ANGELUCCI.** Crustal stress and seismic activity in the Ionian archipelago as inferred by combined satellite and ground based observations on the Kefallinla Island (Greece). *Cello and Malamud,* 2006, 63-78
- **POSCOLIERI, MAURIZIO ; GIOVANNI P.GREGORI ; GABRIELE PAPARO ; ALESSANDRO ZANINI.** Crustal deformation and AE monitoring: annual variation and stress-soliton propagation. *Nat. Hazards Earth Syst. Sci.,* 2006, vol. 6, 961-971
- Acoustic emission. Microseismic, learning how to listen to the Earth. 2008, vol. 1, 68
- **RUZZANTE, JOSÈ ; MARIA ISABEL LÒPEZ PUMAREGA ; GIOVANNI P. GREGORI ; GABRIELE PAPARO ; ROSA PIOTRKOWSKI ; MAURIZIO POSCOLIERI ; ALESSANDRO ZANINI.** Acoustic emission (AE), tides and degassing on the Peteroa volcano (Argentina). *Ruzzante and Lòpez Pumarega,* 2008, 37-68

- Historical events and people in geosciences, Selected papers from the symposia of the Interdivisional Commission on History of IAGA during the IUGG General Assembly, held in Hamburg. Jupiterstrasse 15. Verlag Peter Lang, 1983, 220
- Advances in geosciencesempio. 1990, 358
- Physics and geophysics with special historical case studies (A Festschrift in honour of Karl-Heinrich Wiederkehr). Mitteilungen des Arbeitskreises Geschichte der Geophysik der DDG. 1997, 1-409
- Meteorological and geophysical fluid dynamics (A book to commemorate the centenary of the birth of Hans Ertel). Arbeitkreis Geschichte der Geophysik und Kosmische Physik. 2004, 417
- Case studies in physics and geophysics. Beitrage zur Geschichte der Geophysik und Kosmischen Physik. Journal for the history of Geophysics and Cosmical Physics. February 2006, 126
- Solar terrestrial variability and global change. 1992, 243
- Geophysics: past achievements and future challengesempio Newsletter of IDCH-IAGA. 1994, 1-191